# EUROPEAN PATENT APPLICATION

(11) **EP 4 280 027 A1**
(43) Date of publication of application: **22.11.2023**
(21) Application number: 23717386.9
(22) Date of filing: 28.02.2023
(51) Int. Cl.: G06F 1/16, F16C 11/04, G06F 3/0481, G06F 3/0486, H04M 1/02

(54) **ELECTRONIC DEVICE COMPRISING FINGERPRINT SENSOR MODULE RESPONDING TO VARIATIONS IN DISPLAY**

(30) Priority: 31.03.2022 KR 20220040739; 08.06.2022 KR 20220069667
(71) Applicant: Samsung Electronics Co., Ltd., Suwon-si, Gyeonggi-do 16677 (KR)
(72) Inventor: KANG, Hyunggwang, Suwon-si, Gyeonggi-do 16677 (KR); KANG, Jooyoung, Suwon-si, Gyeonggi-do 16677 (KR); KIM, Junhyuk, Suwon-si, Gyeonggi-do 16677 (KR); SEO, Soohyun, Suwon-si, Gyeonggi-do 16677 (KR); LEE, Wonho, Suwon-si, Gyeonggi-do 16677 (KR); JEONG, Hoyoung, Suwon-si, Gyeonggi-do 16677 (KR); JUNG, Hojin, Suwon-si, Gyeonggi-do 16677 (KR); CHO, Hyoungtak, Suwon-si, Gyeonggi-do 16677 (KR); LEE, Soyoung, Suwon-si, Gyeonggi-do 16677 (KR); LEE, Junghyeob, Suwon-si, Gyeonggi-do 16677 (KR)
(74) Representative: Nederlandsch Octrooibureau
(86) International application number: PCT/KR2023/002790
(87) International publication number: WO 2023/191320

(57) **Abstract**

According to various embodiments of the disclosure, an electronic device may include a first housing, a second housing slidably coupled to the first housing, a flexible display comprising a first area visible from an outside when the second housing is in a slide-in state and a second area extending on a substantially identical plane with the first area when the second housing is in a slide-out state, a first fingerprint sensor module disposed on at least a part of a back surface of the first area of the flexible display, a second fingerprint sensor module disposed on at least a part of a back surface of the second area of the flexible display, and an electric connection member configured to electrically connect the first fingerprint sensor module and the second fingerprint sensor module, wherein a position of the first fingerprint sensor module from a lower end of the first housing in the slide-in state may be disposed to overlap a position of the second fingerprint sensor module from the lower end of the first housing in the slide-out state. Various embodiments other than various embodiments disclosed herein may be possible.

## Description

### [Technical Field]

Various embodiments of the disclosure relate to an electronic device including a fingerprint sensor module configured to respond to a variation in a display.

### [Background Art]

Electronic devices have gradually become slim, and have been improved to enhance the design aspect thereof and to differentiate functional elements thereof. Electronic devices have evolved from unilaterally rectangular shapes to more diversified shapes. An electronic device may have a deformable structure such that the display size thereof can be adjusted, in order to ensure portability and usability of the electronic device. For example, an electronic device may have a structure (e.g., rollable structure or slidable structure) such that the display area of the display can be varied through support housings configured to operate in a sliding type with regard to each other.

An electronic device may acquire the user's biometric information from a sensor (e.g., fingerprint sensor, image sensor) as a method for performing user authentication. For example, the electronic device may acquire a fingerprint image of a finger through a fingerprint sensor, thereby performing fingerprint recognition.

### [Disclosure of Invention]

### [Technical Problem]

An electronic device may acquire the user's biometric information by using a fingerprint sensor attached to the lower end of the display thereof.

However, when the electronic device has a deformable structure such that the display size can be adjusted, the position in which the fingerprint sensor is mounted may be changed by deformation of the electronic device. For example, the display area of the display is varied depending on whether the electronic device slides or not, and the position in which the fingerprint sensor is mounted changes as well. This may cause the inconvenience of having to perform fingerprint recognition in a different position on the display, depending on whether the electronic device slides or not.

An electronic device according to various embodiments of the disclosure may include a first fingerprint sensor module disposed on at least a part of the back surface of a first area (e.g., planar portion) of a flexible display and a second fingerprint sensor module disposed on at least a part of a second area (e.g., bendable portion) of the flexible display. When the electronic device is viewed from the front, the position in which the first fingerprint sensor module is disposed in a slide-in state of the electronic device and the position in which the second fingerprint sensor module is disposed in a slide-out state of the electronic device may be substantially identical.

An electronic device according to various embodiments of the disclosure may include a fingerprint sensor module disposed in a partial area of a first support member, a second support member having a first fingerprint sensor hole formed in an area corresponding to the fingerprint sensor module when the electronic device is in a slide-in state, and a support bar (multi-bar) having a second fingerprint sensor hole formed in an area corresponding to the fingerprint sensor module when the electronic device is in a slide-out state. When the electronic device is viewed from the front, the position of the first fingerprint sensor hole formed in a partial area of the second support member in the slide-in state of the electronic device and the position of the second fingerprint sensor hole formed in a partial area of the support bar in the slide-out state of the electronic device may be substantially identical.

Problems to be solved by the disclosure are not limited to the above-mentioned problems, and may be variously expanded without deviating from the idea and scope of the disclosure.

### [Solution to Problem]

An electronic device according to various embodiments of the disclosure may include a first housing, a second housing slidably coupled to the first housing, a flexible display including a first area visible from an outside when the second housing is in a slide-in state and a second area extending on a substantially identical plane with the first area when the second housing is in a slide-out state, a first fingerprint sensor module disposed on at least a part of a back surface of the first area of the flexible display, a second fingerprint sensor module disposed on at least a part of a back surface of the second area of the flexible display, and an electric connection member configured to electrically connect the first fingerprint sensor module and the second fingerprint sensor module, wherein a position of the first fingerprint sensor module from a lower end of the first housing in the slide-in state may be disposed to overlap a position of the second fingerprint sensor module from the lower end of the first housing in the slide-out state.

An electronic device according to various embodiments of the disclosure may include a first housing including a first support member, a second housing comprising a second support member and slidably coupled to the first housing, a flexible display including a first area visible from an outside when the second housing is in a slide-in state and a second area extending on a substantially identical plane with the first area when the second housing is in a slide-out state, a multi-bar configured to support a part of a back surface of the flexible display and attached to the flexible display, a fingerprint sensor module disposed on the first support member, a first fingerprint sensor hole formed in a partial area of the second support member, and a second fingerprint sensor hole formed in a partial area of the multi-bar, wherein a position of the first fingerprint sensor hole from a lower end of the first housing in the slide-in state is disposed to overlap a position of the second fingerprint sensor hole from the lower end of the first housing in the slide-out state.

### [Advantageous Effects of Invention]

When an electronic device according to various embodiments of the disclosure is viewed from the front, the position of a first fingerprint sensor module disposed on at least a part of the back surface of a first area (e.g., planar portion) of a flexible display in a slide-in state of the electronic device and the position of a second fingerprint sensor module disposed on at least a part of the back surface of a second area (e.g., bendable portion) of the flexible display in a slide-out state of the electronic device is substantially identical, and the electronic device may thus acquire biometric information in substantially the same position of the display regardless of the slide-in state/slide-out state of the electronic device.

When an electronic device according to various embodiments of the disclosure is viewed from the front, the position of a first fingerprint sensor hole formed in a partial area of a second support member corresponding to an area in which a fingerprint sensor module is disposed in a slide-in state of the electronic device and the position of a second fingerprint sensor hole formed in a partial area of a support bar corresponding to an area in which the fingerprint sensor module is disposed in a slide-out state of the electronic device is substantially identical, and the electronic device may thus acquire biometric information in substantially the same position of the display regardless of the slide-in state/slide-out state of the electronic device.

An electronic device according to various embodiments of the disclosure can acquire biometric information in substantially the same position of the display such that consistency in user experience may be provided in connection with performing user authentication.

Various other advantageous effects identified explicitly or implicitly through the disclosure may be provided.

### [Brief Description of Drawings]

FIG. 1 is a block diagram of an electronic device in a network environment according to various embodiments.
FIG.2A and FIG. 2B are views illustrating a front surface and a rear surface of an electronic device in a slide-in state, respectively, according to various embodiments.
FIG.3A and FIG. 3B are views illustrating a front surface and a rear surface of an electronic device in a slide-out state, respectively, according to various embodiments.
FIG. 4 is an exploded perspective view of an electronic device according to various embodiments.
FIG. 5 illustrates multiple fingerprint sensor modules disposed on the back surface of a flexible display according to various embodiments.
FIG. 6 is a side view of multiple fingerprint sensor modules disposed on the back surface of a flexible display according to various embodiments.
FIG. 7 illustrates multiple fingerprint sensor modules disposed on the back surface of a flexible display, when an electronic device is viewed from the front, according to various embodiments.
FIG. 8 illustrates a method for performing biometric authentication by using multiple fingerprint sensor modules according to various embodiments.
FIG. 9 is a front view of an electronic device according to various embodiments.
FIG. 10 is a front view of a fingerprint sensor module disposed in a partial area of a frame cover according to various embodiments.
FIG. 11 is a side view of a fingerprint sensor module disposed in a partial area of a frame cover according to various embodiments.
FIG. 12A is a front view of a fingerprint sensor module and a first support member, which are disposed in a partial area of a frame cover, when an electronic device is in a slide-in state, according to various embodiments.
FIG. 12B is a front view of a fingerprint sensor module, a first support member, and a multi-bar, which are disposed in a partial area of a frame cover, when an electronic device is in a slide-out state, according to various embodiments.
FIG. 13 illustrates operations of a fingerprint sensor module according to a slide-in state or slide-out state of an electronic device according to various embodiments.
FIG. 14 is a side view of a fingerprint sensor module disposed in a partial area of a frame cover according to various embodiments.
FIG. 15 is a side view of a fingerprint sensor module disposed in a partial area of a frame cover according to various embodiments.
FIG. 16 is a front view of an electronic device including a fingerprint sensor module according to various embodiments.
FIG. 17 is a partial sectional view of an electronic device taken along line A-A' in FIG. 7.

### [Mode for the Invention]

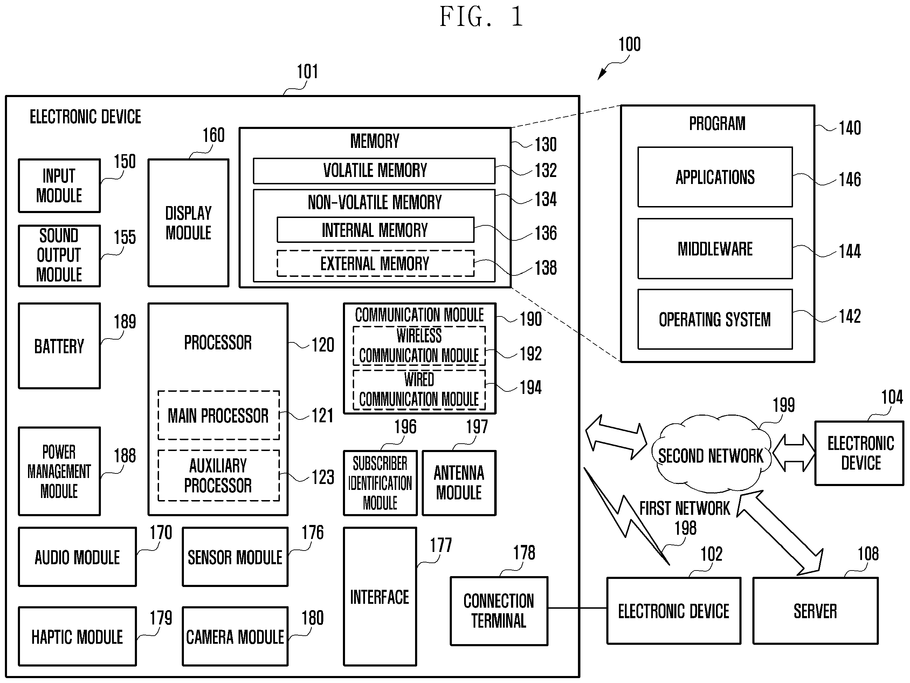

FIG. 1 is a block diagram illustrating an electronic device 101 in a network environment 100 according to various embodiments.

Referring to FIG. 1, an electronic device 101 in a network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connection terminal 178, a haptic module 179, a camera module 180, a power management module 188, a battery 189, a communication module 190, a subscriber identification module (SIM) 196, or an antenna module 197. In some embodiments, at least one of the components (e.g., the connection terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134. The non-volatile memory 134 may include an internal memory 136 and/or an external memory 138.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) (e.g., speaker or headphone) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., through wires) or wirelessly. According to an embodiment, the interface 177 may include, for example, a high-definition multimedia interface (HDMI), a universal serial bus (USB) interface, a secure digital (SD) card interface, or an audio interface.

The connection terminal 178 may include a connector via which the electronic device 101 may be physically connected with the external electronic device (e.g., the electronic device 102). According to an embodiment, the connection terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., an application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, Wi-Fi direct, or infrared data association (IrDA)) or the second network 199 (e.g., a long-range communication network, such as a legacy cellular network, a fifth generation (5G) network, a next-generation communication network, the Internet, or a computer network (e.g., LAN or wide area network (WAN))). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large-scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., an mmwave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

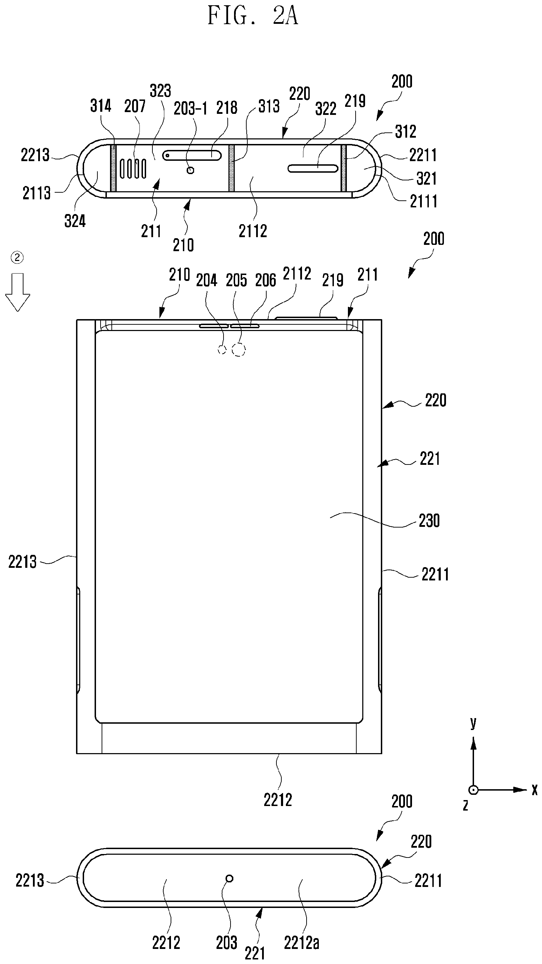

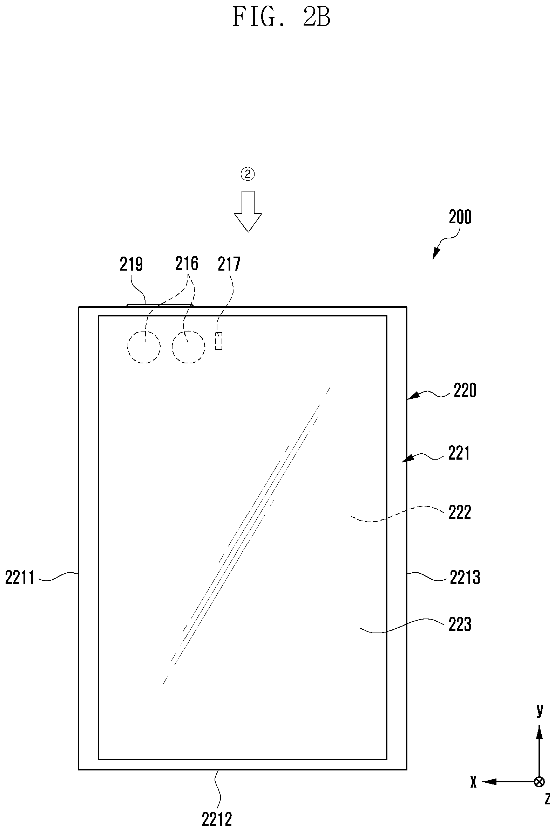

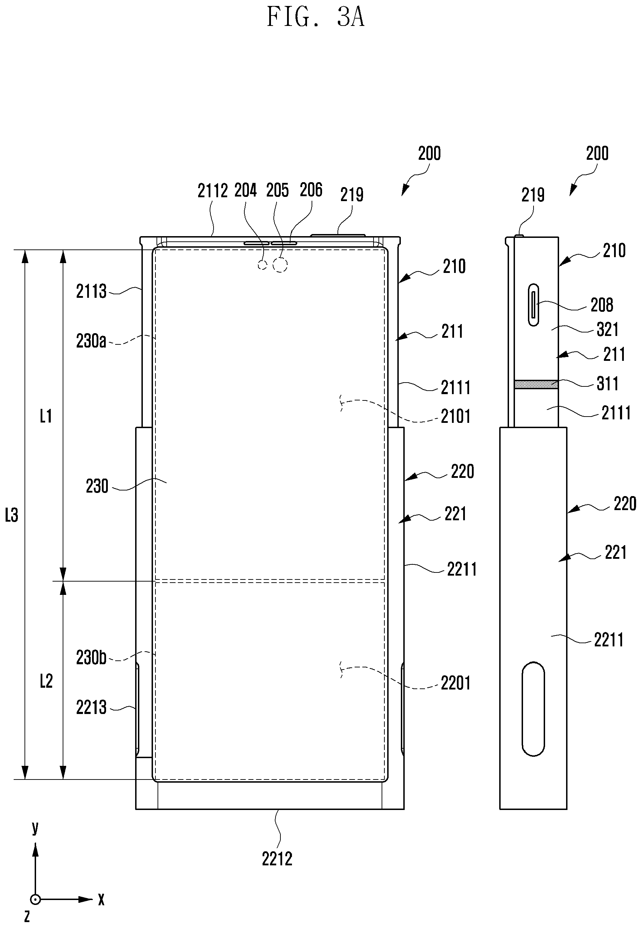

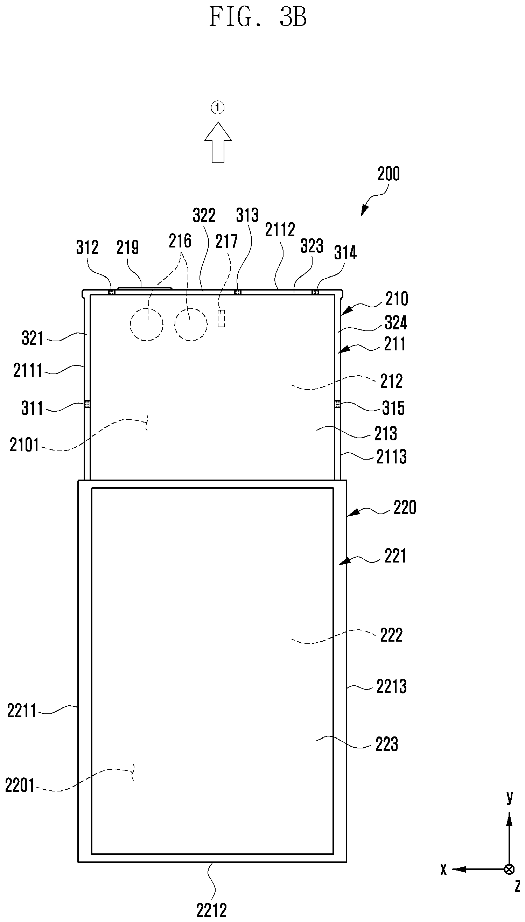

FIG. 2A and FIG. 2B are views illustrating a front surface and a rear surface of an electronic device in a slide-in state, respectively, according to various embodiments. FIG. 3A and FIG. 3B are views illustrating a front surface and a rear surface of an electronic device in a slide-out state, respectively, according to various embodiments.

The electronic device 200 of FIG. 2A to FIG. 3B may be at least partially similar to the electronic device 101 of FIG. 1 or may further include other embodiments of an electronic device.

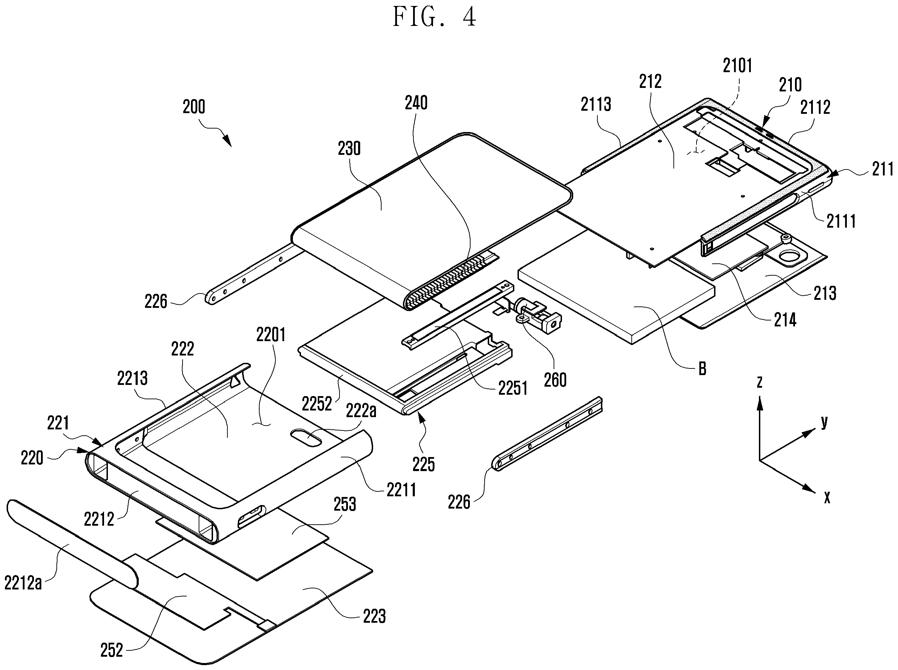

Referring to FIG. 2A to FIG. 3B, the electronic device 200 may include a first housing 210 (e.g., a first housing structure, a moving unit, or a slide housing), a second housing 220 (e.g., a second housing structure, a fixed unit, or a base housing) slidably coupled to the first housing 210 in a designated direction (e.g., direction ① or direction ②)(e.g., the±y-axis direction), and a flexible display 230 (e.g., expandable display or extendable display) disposed to be supported by at least a part of the first housing 210 and the second housing 220. According to an embodiment, the electronic device 200 may be configured to allow the first housing 210 to be slid out in a first direction (direction ①) or be slid in in a second direction (direction ②) opposite to the first direction (direction ①), with reference to the second housing 220 gripped by a user. As can be seen in FIG. 2A to FIG. 3B, the first direction and the second direction are substantially parallel to a direction in which the electronic device 200 is elongated. Nevertheless, it should be appreciated that it is also possible to provide the first and second housing such that these may be slid-in and slid-out in a different direction, such as the x-axis direction, the z-axis-direction, and/or a combination of x-, y, and/or z-axis direction. According to an embodiment, at least a part of the first housing 210 including a first space 2101 may be received in a second space 2201 of the second housing 220, and may thus be changed to a slide-in state. According to an embodiment, the electronic device 200, in a slide-out state, may at least partially form the same plane as at least a part of the first housing 210, and, in a slide-in state, may include a multi-bar (e.g., a multi-bar 240 of FIG. 4)(e.g., a bendable member or a bendable support member, a multi-joint hinge module, or a multi-bar assembly) at least partially received in the second space 2201 of the second housing 220.According to an embodiment, in a slide-in state, at least a part of the flexible display 230 may be received in the second space 2201 of the second housing 220 while being supported by the multi-bar, and may thus be disposed to be invisible from the outside. According to an embodiment, in a slide-out state, at least a part of the flexible display 230 may be disposed to be visible from the outside while being supported by the multi-bar at least partially forming the same plane as the first housing 210.

According to various embodiments, an electronic device 200 may include a first housing 210 including a first side surface member 211 and a second housing 220 including a second side surface member 221. According to an embodiment the first side surface member 211 may include a first side surface 2111 having a first length along a first direction (e.g., the y-axis direction), a second side surface 2112 extending to have a second length shorter than the first length along a direction (e.g., the x-axis direction) substantially perpendicular to the first side surface 2111, and/or a third side surface 2113 extending from the second side surface 2112 to be substantially parallel to the first side surface 2111 and having the first length. According to an embodiment, the first side surface member 2111 may be at least partially configured of a conductive member (e.g., metal, such as aluminum, stainless steel (STS), and/or magnesium). In an embodiment, the first side surface member 211 may be configured by a combination of a conductive material (e.g., metal, such as aluminum, stainless steel (STS), and/or magnesium) and a non-conductive material (e.g., polymer). According to an embodiment, the first housing 210 may include a first support member 212 (e.g., front cover) extending from at least a part of the first side surface member 211 to at least a part of the first space 2101. According to an embodiment, the first support member 212 may be integrally formed with the first side surface member 211. In an embodiment, the first support member 212may be separately formed from the first side surface member 211 and may be structurally coupled to the first side surface member 211.

According to various embodiments, the second side surface member 221 may include a fourth side surface 2211 at least partially corresponding to the first side surface 2111 and having a third length, a fifth side surface 2212 extending from the fourth side surface 2211 in a direction substantially parallel to the second side surface 2112 and having a fourth length shorter than the third length, and/or a sixth side surface 2213 extending from the fifth side surface 2212 to correspond to the third side surface 2113 and having the third length. According to an embodiment, the electronic device 200 may include a side cover 2212a disposed on the fifth side surface 2212. According to an embodiment, the second side surface member 221 may be at least partially configured of a conductive material (e.g., metal, such as aluminum, stainless steel (STS), or magnesium). In an embodiment, the second side surface member 221 may be configured by a combination of a conductive material (e.g., metal, such as aluminum, stainless steel (STS), or magnesium) and a non-conductive material (e.g., polymer). According to an embodiment, at least a part of the second side surface member 221 may include a second support member 222 extending to at least a part of the second space 2201 of the second housing 220. According to an embodiment, the second support member 222 may be integrally formed with the second side surface member 221. In an embodiment, the second support member 222 may be separately formed from the second side surface member 221, and may be structurally coupled to the second side surface member 221.

According to various embodiments, the first side surface 2111 and the fourth side surface 2211 may be slidably coupled with respect to each other. According to an embodiment, the third side surface 2113and the sixth side surface 2213 may be slidably coupled with respect to each other. According to an embodiment, in a slide-in state, the first side surface 2111 may overlap the fourth side surface 2211 and may thus be disposed to be substantially invisible from the outside. According to an embodiment, in a slide-in state, the third side surface 2113 may overlap the sixth side surface 2213 and may thus be disposed to be substantially invisible from the outside. In an embodiment, in a slide-in state, at least a part of the first side surface 2111 and the third side surface 2113 may be disposed to be at least partially visible from the outside. According to an embodiment, in a slide-in state, at least a part of the first support member 212 may overlap the second support member 222.

According to various embodiment, the first housing 210 may include a first rear cover 213 coupled to at least a part of the first side surface member 211. According to an embodiment, the first rear cover 213 may be disposed to be coupled to at least a part of the first support member 212. In an embodiment, the first rear cover 213 may be integrally formed with the first side surface member 211. According to an embodiment, the first rear cover 213 may be configured of a polymer, coated or tinted glass, ceramic, metal (e.g., aluminum, stainless steel (STS), or magnesium), or a combination of at least two of these materials. In an embodiment, the first rear cover 213 may extend to at least a part of the first side surface member 211. In an embodiment, at least a part of the first support member 212may be replaced by the first rear cover 213.

According to various embodiments, the second housing 220 may include a second rear cover 223 coupled to at least a part of the second side surface member 221. According to an embodiment, the second rear cover 223may be disposed to be coupled to at least a part of the second support member 222. In an embodiment, the second rear cover 223may be integrally formed with the second side surface member 221. According to an embodiment, the second rear cover 223 may be configured of a polymer, coated or tinted glass, ceramic, metal (e.g., aluminum, stainless steel (STS), and/or magnesium), or a combination of at least two of these materials. In an embodiment, the second rear cover 223 may extend to at least a part of the second side surface member 221. In an embodiment, at least a part of the second support member 222 may be replaced by the second rear cover 223.

According to various embodiments, an electronic device 200 may include a flexible display 230 disposed to be supported by at least a part of the first housing 210 and the second housing 220. According to an embodiment, the flexible display 230 may include a first area 230a (e.g., a flat surface portion) always visible from the outside and a second area 230b (e.g., a bendable portion) extending from the first area 230a and at least partially received in the second space 2201 of the second housing 220 so as to be invisible from the outside in a slide-in state. According to an embodiment, at least a part of the first area 230a may be disposed to be at least partially supported by the first housing 210, and the second area 230b may be disposed to be at least partially supported by a multi-bar 240. According to an embodiment, the second area 230b of the flexible display 230 may extend from the first area 230a while being supported by the multi-bar 240 in a state in which the first housing 210 is slid out along the first direction (direction ①), form substantially the same plane as the first area 230a, and be disposed to be visible from the outside. According to an embodiment, the second area 230b of the flexible display 230 may be received in the second space 2201 of the second housing 220 in a state in which the first housing 210 is slid in along the second direction (direction ②), and be disposed to be invisible from the outside. Therefore, in the electronic device 200, the first housing 210 may be slid from the second housing 220 along a designated direction (e.g., the ±y-axis direction), and thus the display area of the flexible display 230 may be changed.

According to various embodiments, the flexible display 230 may have a variable length in the first direction (direction ①) according to the sliding movement of the first housing 210 moving with reference to the second housing 220. For example, in a slide-in state, the flexible display 230 may have a first display area (e.g., the area corresponding to the first area 230a) corresponding to a first length (L1). According to an embodiment, in a slide-out state, the flexible display 230 may extend to have a second display area (e.g., the area including the first area 230a and the second area 230b) greater than the first display area and corresponding to a third length (L3) longer than the first length (L1), according the sliding movement of the first housing 210 additionally moving by a second length (L2) with reference to the second housing 220.

According to various embodiments, the electronic device 200 may include at least one component. The component may be at least one among an input device (e.g., a microphone 203-1), a sound output device (e.g., a call receiver 206 or a speaker 207), sensor modules 204 and 217, a camera module (e.g., a first camera module 205 or a second camera module 216), a connector port 208, a key input device 219, or an indicator (not shown) arranged in the first space 2101 of the first housing 210. According to an embodiment, the electronic device 200 may include another component, such as an input device (e.g., a microphone 203) disposed in the second housing. In another embodiment, the electronic device 200 may be configured to omit at least one of the components described above or additionally include other components. In another embodiment, at least one of the components described above may be arranged in the second space 2201 of the second housing 220.

According to various embodiments, the input device may include a microphone 203-1. In an embodiment, the input device (e.g., the microphone 203-1) may include a plurality of microphones arranged to be capable of detecting the direction of sound. The sound output device may include, for example, a call receiver 206 and/or a speaker 207. According to an embodiment, the speaker 207 may correspond to the outside through at least one speaker hole configured through the first housing 210, at a position always exposed to the outside regardless of slide-in/slide-out states. According to an embodiment, in a slide-out state, the connector port 208 may correspond to the outside through a connector port hole configured through the first housing 210. In an embodiment, in a slide-in state, the connector port 208 may be configured through the second housing and correspond to the outside through an opening configured to correspond to the connector port hole. In an embodiment, the call receiver 206 may include a speaker (e.g., a piezo speaker) configured to operate without a separate speaker hole.

According to various embodiments, the sensor modules 204 and 217 may produce data values or electrical signals corresponding to an internal operation state or an external environmental state of the electronic device 200. For example, the sensor modules 204 and 217 may include a first sensor module 204 (e.g., a proximity sensor or alight sensor) disposed on the front surface of the electronic device 200 and/or a second sensor module 217 (e.g., a heart rate monitoring (HRM) sensor) disposed on the rear surface of the electronic device 200. According to an embodiment, the first sensor module 204 may be disposed under (e.g., the-z-axis direction) the flexible display 230 on the front surface of the electronic device 200. According to an embodiment, the first sensor module 204 and/or the second sensor module 217 may include at least one among a proximity sensor, a light sensor, a time of flight (TOF) sensor, an ultrasonic sensor, a fingerprint sensor, a gesture sensor, a gyro sensor, a barometric pressure sensor, a magnetic sensor, an acceleration sensor, a grip sensor, a color sensor, an infrared (IR) sensor, a biometric sensor, a temperature sensor, or a humidity sensor.

According to various embodiments, the camera modules may include the first camera module 205 disposed on the front surface of the electronic device 200 and the second camera module 216 disposed on the rear surface of the electronic device 200. According to an embodiment, the electronic device 200 may include a flash (not shown). The flash may be positioned adjacent to the second camera module 216, or at any other suitable location. According to an embodiment, the camera modules 205 and 216 may include one or more lenses, image sensors, and image signal processors. According to an embodiment, the first camera module 205 may be configured to be disposed under (e.g., the-z-axis direction) the flexible display 230 and photograph a subject via a part of an activation area (e.g., a display area) of the flexible display 230.

According to various embodiments, the first camera module 205 of the camera modules and one sensor module 204 among the sensor modules 204 and 217 may be arranged to detect the external environment via the flexible display 230. For example, the first camera module 205 or one sensor module 204 may be disposed to be capable of coming into contact with the external environment through a perforated opening or a transmission area disposed on the flexible display 230, in the first space 2101 of the first housing 210. According to an embodiment, the area, facing the first camera module 205, of the flexible display 230 is a part of the display area configured to display content and may be formed as a transmission area having a designated transmittance. According to an embodiment, the transmission area may be configured to have a transmittance ranging from about 5% to about 20%. The transmission area may be imaged by the image sensor and may include an area overlapping an effective area (e.g., angle of view area) of the first camera module 205, through which light for producing an image passes. For example, the transmission area of the flexible display 230 may include an area in which the arrangement density of pixels and/or wiring density thereof is lower than that of the surrounding area. For example, the transmission area may replace the above-described opening. For example, one camera module 205 may include an under display camera (UDC). In an embodiment, one sensor module 204 may be disposed to perform functions thereof in the inner space of the electronic device 200 via the flexible display 230 without being visually exposed.

According to various embodiments, the slide-in/slide-out operations of the electronic device 200 may be automatically performed. For example, the slide-in/slide-out operations of the electronic device 200 may be performed via a driving motor (e.g., the driving motor 260 of FIG. 4). Any kind of suitable driving motor 260 may be used. For example, the driving motor 260 may include a pinion gear disposed in the second space 2201 of the second housing 220 and a gearing operation of a rack gear (e.g., a rack gear 2251 of FIG. 4) disposed in the first space 2101 of the first housing 210 and gear-coupled to the pinion gear. For example, in case of detecting a triggering operation for changing from a slide-in state to a slide-out state or changing from a slide-out state to a slide-in state, the processor (e.g., the processor 120 of FIG. 1) of the electronic device 200 may operate the driving motor 260 disposed in the electronic device 200. According to an embodiment, the triggering operation may comprise a user selecting (e.g., touching) an object displayed on the flexible display 230, or may include an operation of a physical button (e.g., a key button) included in the electronic device 200. In an embodiment, the electronic device 200 may include a manual slide module (e.g., a hinge module using a spring), and the slide-in/slide-out operations may be performed manually via a user's operation.

According to various embodiments, the electronic device 200 may include at least one conductive portion 321, 322, 323, and 324 (e.g., a metal material (such as aluminum, stainless steel (STS), and/or magnesium) or a conductive member) segmented via a plurality of segmentation portions 311, 312, 313, 314, and 315 (e.g., a polymer, a non-conductive member, or a segmentation portion) in the first side surface member 212. In an embodiment, at least a part of the at least one conductive portion 321, 322, 323, and 324 may be electrically connected to a wireless communication circuit (e.g., the wireless communication module 192 of FIG. 1), and may thus be operated as at least one antenna.

FIG. 4 is an exploded perspective view of an electronic device according to various embodiments of the disclosure.

In describing an electronic device 200 of FIG. 4, the same reference numerals have been used for the components substantially the same as the components of the electronic device 200 of FIG. 2A to FIG. 3B, and the detailed descriptions may be omitted. Furthermore, it should be appreciated that any component described with reference to FIG. 4 may, alone or in combination with any other component described with reference to FIG. 4, optionally be used in the device described with reference to FIG. 2A to FIG. 3B.

Referring to FIG. 4, an electronic device 200 may include a first housing 210 including a first space 2101, a second housing 220 slidably coupled to the first housing 210 and including a second space 2201, a multi-bar 240 disposed in the second space 2201 to be at least partially rotatable, a flexible display 230 disposed to be supported by at least a part of the multi-bar 240 and the first housing 210, and a driving module configured to drive the first housing 210 in a direction (e.g., the -y-axis direction) of being slid in to the second housing 220 and/or a direction (e.g., the y-axis direction) of being slid out from the second housing 220. As can be seen in FIG. 4, the y-axis direction may be substantially parallel to a direction in which the housing is elongated. Nevertheless, it should be appreciated that it is also possible to provide the first and second housing such that these may be slid-in and slid-out in a different direction, such as the x-axis direction, the z-axis-direction, and/or a combination of x-, y, and/or z-axis direction. According to an embodiment, the first housing 210 may include a first side surface member 211 and a first rear cover 213 coupled to at least a part of the first side surface member 211 (e.g., at least a part of a first support member 212). According to an embodiment, the second housing 220 may include a second side surface member 221 and a second rear cover 223 coupled to at least a part of the second side surface member 221 (e.g., at least a part of a second support member 222). According to an embodiment, the driving module may include a driving motor 260 disposed in the first space 2101, the driving motor 260 preferably including a pinion gear and a rack gear 2251 disposed in the second space 2201 to be engaged with the pinion gear. According to an embodiment, the driving module may be coupled to the driving motor 260, and thus may further include a deceleration module configured to reduce a rotation speed and disposed to reduce driving resistance. According to an embodiment, the driving motor 260 may be disposed to be supported by at least a part of the first support member 212 in the first space 2101 of the first housing 210. According to an embodiment, the driving motor 260 may be fixed to an end (e.g., an edge) of the first support member 212 in the first space 2101 in the slide-in direction (e.g., -y-axis direction).

According to various embodiments, the electronic device 200 may include a plurality of electronic components arranged in the first space 2101. According to an embodiment, the plurality of electronic components may include at least one among a battery (B), a camera module (e.g., the first camera module 205 of FIG. 2A and/or the second camera module 216 of FIG. 3B), a socket module (e.g., a socket module 218 of FIG. 2A)(e.g., a SIM tray), a speaker (e.g., a speaker 207 and/or a receiver 206 of FIG. 2A), a key button (e.g., a key button 219 of FIG. 3A), at least one sensor module (e.g., a sensor module 204 of FIG. 3A and/or a sensor module 217 of FIG. 3B), and a connector port (e.g., the connector port 208 of FIG. 3A).

According to various embodiments, the electronic device 200 may include a rear bracket 214 disposed to cover at least a part of a plurality of electronic components arranged between the first support member 212 and the first rear cover 213 in the first housing 210. According to an embodiment, the rear bracket 214 may be structurally coupled to at least a part of the first support member 212. In an embodiment, the rear bracket 214 may be omitted. According to an embodiment, the rear bracket 214 may cover the plurality of electronic components, and be disposed to support the first rear cover 213.

According to various embodiments, the electronic device 200 may be disposed in the second space 2201of the second housing 220, and include a frame cover 225 (e.g., a support bracket (e.g., a display support bar (DSB))) of a plate type, the frame cover 225 being slidably coupled to at least a part of the first support member 212 (e.g., front cover). According to an embodiment, the frame cover 225 is disposed on one end and may include a support part 2252 having a curved outer surface to support the rear surface of the multi-bar 240 that is bent during a sliding operation. According to an embodiment, the frame cover 225 may include the rack gear 2251 disposed to be coupled to a pinion gear of the driving motor 260. According to an embodiment, the rack gear 2251 may be fixed to the frame cover 225, or be integrally formed with the frame cover 225. According to an embodiment, the electronic device 200 may include a pair of guide rails 226 arranged at opposite sides of the frame cover 225 to guide opposite ends of the multi bar 240 in a sliding direction.

According to various embodiments, when the electronic device 200 is in a slide-in state, in the second support member 222, the second housing 220 may include a camera module 216 disposed in the first housing 210and/or an opening 222a (e.g., a through hole) disposed in an area corresponding to a sensor module 217. According to an embodiment, when the electronic device 200 is in a slide-in state, the camera module 216 and/or the sensor module 217 may detect the external environment through the opening 222a configured through the second housing 220. The area of the second rear cover 223, corresponding the camera module 216 and/or the sensor module 217 may be transparently processed.

According to various embodiments, the electronic device 200 may include an antenna member 253 and a second substrate 252 disposed between the second support member 222and the second rear cover 223 in the second housing 220. According to an embodiment, the second substrate 252 and the antenna member 253may be arranged on at least a part of the second support member 222. According to an embodiment, the second substrate 252 and the antenna member 253 may be electrically connected to the first substrate (not shown) formed in the first space 2101 of the first housing 210 via at least one electrical connection member (e.g., a flexible printed circuit board (FPCB) or a FPCB type RF cable). According to an embodiment, the antenna member 253 may include a multi-function coil (MFC) (or multi-function core) antenna configured to perform a wireless charging function, a near field communication (NFC) function, and/or an electronic payment function. In an embodiment, the antenna member 253may be electrically connected to the second substrate 252 and may thus be electrically connected to the first substrate via the second substrate 252.

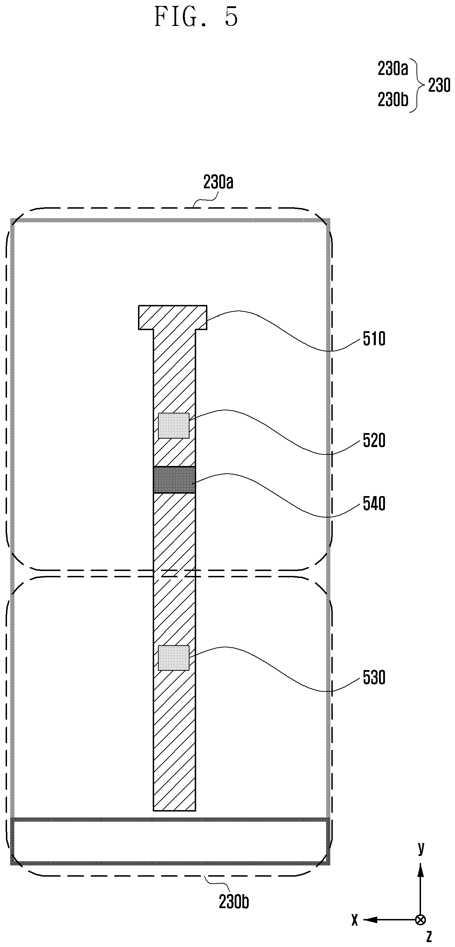

FIG. 5 illustrates multiple fingerprint sensor modules 520, 530 disposed on the back surface of a flexible display 230 according to various embodiments.

Referring to FIG. 5, an electronic device (e.g., electronic device 200 in FIG. 2A to FIG. 4) may include a flexible display 230 disposed to be at least partially supported by a first housing (e.g., first housing 210 in FIG. 2A to FIG. 4) and a second housing (e.g., second housing 220 in FIG. 2A to FIG. 4). The flexible display 230 may include a first area 230a and a second area 230b. For example, the first area 230a of the flexible display 230 may be a planar portion which is always visible from the outside and may be disposed to be at least partially supported by the first housing 210. The second area 230b of the flexible display 230 may refer to a bendable portion at least partially contained in a second space (e.g., second space 2201 in FIG. 3A to FIG. 4) of the second housing 220 such that the same is not visible from the outside when the first housing 210 has slid in along a second direction (e.g., direction ② in FIG. 2A and FIG. 2B). For example, in an embodiment, the second area 230b of the flexible display 230 may be disposed such that, when the first housing 210 has slid out along a first direction (e.g., direction ① in FIG. 3B), the same extends from the first area 230a while being at least partially supported by a multi-bar (e.g., multi-bar 240 in FIG. 4), forms substantially the same plane with the first area 230a, and is visible from the outside.

In an embodiment, a first fingerprint sensor module 520 and a second fingerprint sensor module 530 may be disposed on the back surface (e.g., -z axis direction) of the flexible display 230.

In an embodiment, the first fingerprint sensor module 520 may be disposed in at least a partial area of the back surface (e.g., -z axis direction) of the first area 230a (e.g., planar portion) of the flexible display 230. The first fingerprint sensor module 520 may be disposed in at least a partial area of the first area 230a of the flexible display 230 such that, when an input for user authentication is detected in a slide-in state of the electronic device 200, the electronic device 200 acquires the user's biometric information (e.g., fingerprint information) through the first fingerprint sensor module 520 and performs user authentication by using the same.

In an embodiment, the second fingerprint sensor module 530 may be disposed in at least a partial area of the back surface (e.g., -z axis direction) of the second area 230b (e.g., bendable portion) of the flexible display 230. The second fingerprint sensor module 530 may be disposed in at least a partial area of the second area 230b of the flexible display 230 such that, when an input for user authentication is detected in a slide-out state of the electronic device 200, the electronic device 200 acquires the user's biometric information (e.g., fingerprint information) through the second fingerprint sensor module 530 and performs user authentication by using the same. This is not limiting in any manner, and when an input for user authentication is detected in a slide-out state, the electronic device 200 may further acquire the user's biometric information (e.g., fingerprint information) through the first fingerprint sensor module 520.

In an embodiment, the electronic device 200 may include a sensor driver circuit (e.g., data processing unit) 540 for processing biometric information acquired through the first fingerprint sensor module 520 and/or biometric information acquired through the second fingerprint sensor module 530. For example, the sensor driver circuit 540 may be disposed in a rigid area. For example, the sensor driver circuit 540 may be disposed in at least a partial area of the back surface (e.g., -z axis direction) of the first area 230a (e.g., planar portion) of the flexible display 230.

In various embodiments, the first fingerprint sensor module 250, the sensor driver circuit 540, and the second fingerprint sensor module 530, which are disposed on the back surface (e.g., -z axis direction) of the flexible display 230, may be electrically connected through an electric connection member (e.g., flexible printed circuit board (FPCB)) 510.

Although it has been assumed in connection with describing various embodiments that first biometric information acquired through the first fingerprint sensor module 520 and/or second biometric information acquired through the second fingerprint sensor module 530 is processed through a single sensor driver circuit 540, this assumption is not limiting in any manner. For example, although not illustrated, the electronic device 200 may include a first sensor driver circuit for processing first biometric information acquired through the first fingerprint sensor module 520 and a second sensor driver circuit for processing biometric information acquired through the second fingerprint sensor module 530.

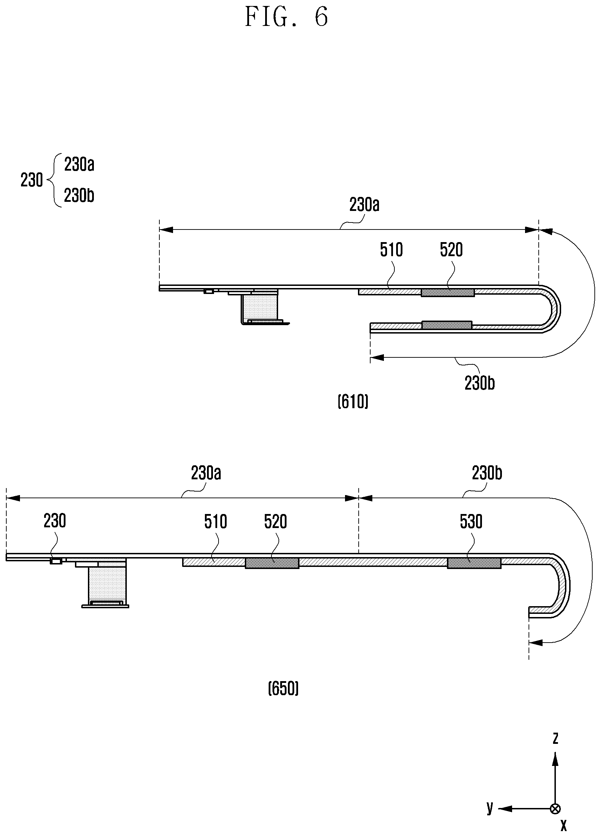

FIG. 6 is a side view of multiple fingerprint sensor modules 520, 530 disposed on the back surface of a flexible display 230 according to various embodiments.

Referring to FIG. 6, reference numeral 610 indicates a view of multiple fingerprint sensor modules 520, 530, viewed from a side surface (e.g., -x axis direction), disposed on the back surface (e.g., -z axis direction surface) of a flexible display 230 when an electronic device (e.g., electronic device 200 in FIG. 2A to FIG. 4) is in a slide-in state. Reference numeral 650 indicates a view of the multiple fingerprint sensor modules 520, 530, viewed from a side surface (e.g., -x axis direction), disposed on the back surface (e.g., -z axis direction surface) of the flexible display 230 when the electronic device 200 is in a slide-out state.

In various embodiments, the first fingerprint sensor module 520 may be disposed in at least a partial area of the back surface (e.g., -z axis direction) of the first area 230a (e.g., planar portion) of the flexible display 230, and the second fingerprint sensor module 530 may be disposed in at least a partial area of the back surface (e.g., -z axis direction) of the second area 230b (e.g., bendable portion) of the flexible display 230.

According to various embodiments, as indicated by reference numeral 610, when the electronic device 200 is in a slide-in state, the first area 230a of the flexible display 230 may be disposed to be always visible from the outside. The first fingerprint sensor module 520 may be disposed on the back surface (e.g., -z axis direction) of the first area 230a of the flexible display 230 such that, when an input for user authentication is detected in a slide-in state of the electronic device 200, the electronic device 200 activates the first fingerprint sensor module 520 and performs user authentication through the first fingerprint sensor module 520.

In an embodiment, when the electronic device 200 is in a slide-in state, the second area 230b of the flexible display 230 may be contained in the inner space 2201 of the second housing 220 while being supported by a multi-bar (e.g., multi-bar 240 in FIG. 4) such that the same is disposed so as to be invisible from the outside. As the second area 230b of the flexible display 230 is disposed to be invisible from the outside, the second fingerprint sensor module 530 disposed on the back surface (e.g., -z axis direction) of the second area 230b of the flexible display 230 may be deactivated.

According to various embodiments, as indicated by reference numeral 650, when the electronic device 200 is in a slide-out state, the second area 230b of the flexible display 230 may be disposed to be visible from the outside while being supported by a multi-bar (e.g., multi-bar 240) which at least partially forms the same plane with the first housing 210. The second fingerprint sensor module 530 may be disposed on the back surface (e.g., -z axis direction) of the second area 230b of the flexible display 230 such that, when an input for user authentication is detected in a slide-out state of the electronic device 200, the electronic device 200 activates the second fingerprint sensor module 530 and performs user authentication through the second fingerprint sensor module 530.

Although it has been assumed in connection with describing various embodiments that the second fingerprint sensor module 530 is activated when an input for user authentication is detected in a slide-out state of the electronic device 200, this assumption is not limiting in any manner. For example, when an input for user authentication is detected in a slide-out state of the electronic device 200, the electronic device 200 may activate the first fingerprint sensor module 520 as well. In this case, the electronic device 200 may perform user authentication through at least one of the activated first fingerprint sensor module 520 and second fingerprint sensor module 530.

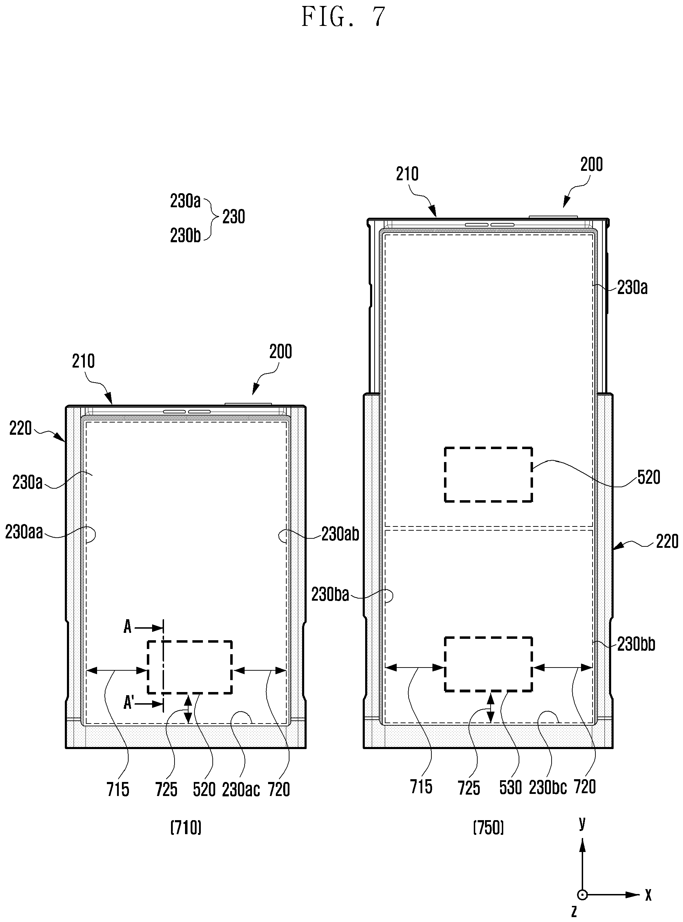

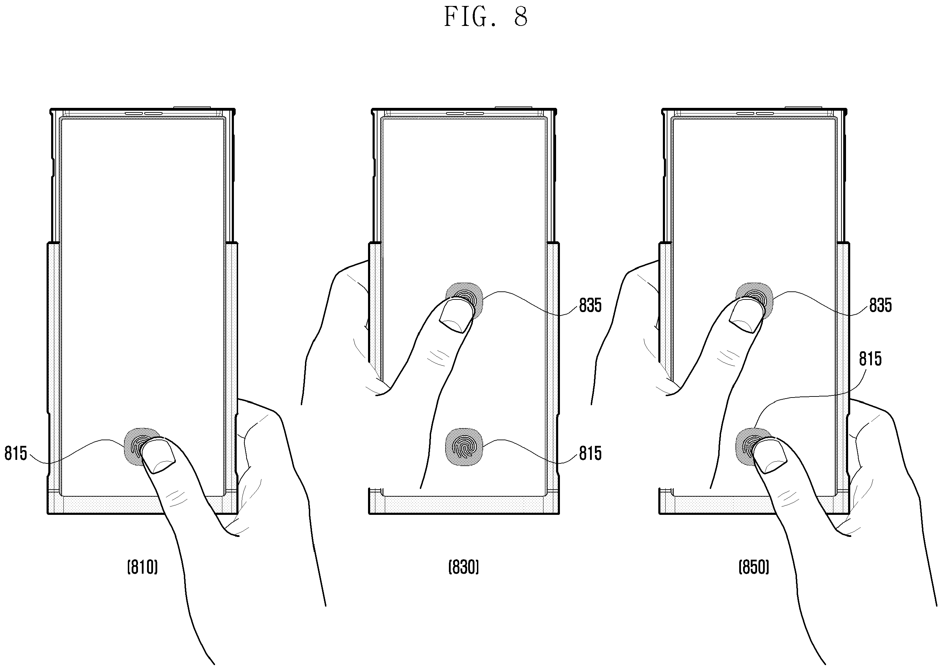

In connection with the above-mentioned operation of performing user authentication through at least one of the activated first fingerprint sensor module 520 and second fingerprint sensor module 530, various embodiments will be described below with reference to FIG. 7 and FIG. 8.

FIG. 7 illustrates multiple fingerprint sensor modules 520, 530 disposed on the back surface of a flexible display 230, when an electronic device 200 is viewed from the front, according to various embodiments.

Referring to FIG. 7, reference numeral 710 indicates a front view of an electronic device (e.g., electronic device 200 in FIG. 2A to FIG. 4) in a slide-in state. Reference numeral 750 indicates a front view of the electronic device 200 in a slide-out state.

In an embodiment, as indicated in reference numeral 710, the first fingerprint sensor module 520 may be disposed to overlap at least a partial area of the back surface (e.g., -z axis direction) of the flexible display 230. The first fingerprint sensor module 520 may be disposed to be spaced apart from a first side surface 230aa of the first area 230a of the flexible display 230 by a first length 715, to be spaced apart from a second side surface 230ab of the first area 230a of the flexible display 230 by a second length 720, and to be spaced apart from a third side surface 230ac of the first area 230a of the flexible display 230 by a third length 725. The first length 715 and the second length 720 may be substantially identical. The third length 725 may be smaller than the first length 715 and the second length 720. However, this is not limiting in any manner, and the first length 715 may be different from the second length 720 and/or the third length 725 may be substantially identical or larger than the first length 715 and/or the second length 720.

In an embodiment, as indicated by reference numeral 750, the second fingerprint sensor module 530 may be disposed to overlap at least a partial area of the back surface (e.g., -z axis direction) of the second area 230b of the flexible display 230.

In various embodiments, when the electronic device 200 is viewed from the front, the position of the first fingerprint sensor module 520 disposed on at least a part of the back surface (e.g., -z axis direction) of the first area 230a of the flexible display 230 when the electronic device 200 is in a slide-in state and the position of the second fingerprint sensor module 530 disposed on at least a part of the back surface (e.g., -z axis direction) of the second area 230b of the flexible display 230 when the electronic device 200 is in a slide-out state may be substantially identical. For example, when the electronic device 200 is in a slide-out state, the second fingerprint sensor module 530 may be disposed to be spaced apart from the first side surface 230ba of the second area 230b of the flexible display 230 by a first length 715, spaced apart from the second side surface 230bb of the second area 230b by a second length 720, and spaced apart from the third side surface 230bc of the second area 230b by a third length 725.

In various embodiments, when the electronic device 200 is viewed from the front, the position of the first fingerprint sensor module 520 disposed on the back surface (e.g., -z axis direction) of the first area 230a of the flexible display 230 when the electronic device 200 is in a slide-in state and the position of the second fingerprint sensor module 530 disposed on the back surface (e.g., -z axis direction) of the second area 230b of the flexible display 230 when the electronic device 200 is in a slide-out state may be substantially identical such that, regardless of whether the electronic device 200 is in a slide-in state or in a slide-out state, biometric information (e.g., fingerprint information) can be acquired in substantially the same position, thereby providing consistency in user experience in connection with performing user authentication.

FIG. 8 illustrates a method for performing biometric authentication by using multiple fingerprint sensor modules 520, 530 according to various embodiments.

In various embodiments, although not illustrated, the first area (e.g., first area 230a in FIG. 3A) of the flexible display (e.g., flexible display 230 in FIG. 2A to FIG. 4) may be disposed to be always visible from the outside when the electronic device (e.g., electronic device 200 in FIG. 2A to FIG. 4) in in a slide-in state. The first fingerprint sensor module 520 (e.g., first fingerprint sensor module 520 in FIG. 5 to FIG. 7) may be disposed on the back surface (e.g., -z axis direction) of the first area 230a of the flexible display 230 such that, when an input for user authentication is detected in a slide-in state of the electronic device 200, the electronic device 200 displays an indicating object (e.g., fingerprint image object and/or guide text object) in a designated area (e.g., area in which first fingerprint sensor module 520 is disposed) of the flexible display 230, thereby enabling fingerprint recognition to be performed (or guided). Based on detecting a finger contact with the indicating object displayed in the designated area of the flexible display 230, the electronic device 200 may acquire a fingerprint image through the first fingerprint sensor module 520 and may perform user authentication by using the acquired fingerprint image. When the electronic device 200 is in a slide-in state, the second area (e.g., second area 230b in FIG. 3A) of the flexible display 230 is not visible from the outside, and the second fingerprint sensor module 530 (e.g., second fingerprint sensor module 530 in FIG. 5 to FIG. 7) disposed to overlap at least a partial area of the back surface (e.g., -z axis direction) of the second area 230b may be deactivated. Deactivating the second fingerprint sensor module 530 when the electronic device 200 is in a slide-in state may reduce energy consumption, thereby improving battery life of the electronic device 200.

Referring to FIG. 8, in various embodiments, when the electronic device 200 switches from a slide-in state to a slide-out state, the second area 230b of the flexible display 230 may be disposed to be visible from the outside. When the electronic device 200 is in a slide-out state, the second area 230b of the flexible display 230 may switch from a state in which the same is disposed to be invisible from the outside to a state in which the same is visible from the outside such that the second fingerprint sensor module 530 disposed to overlap at least a partial area of the back surface (e.g., -z axis direction) of the second area 230b may switch from a deactivated state to an activated state.

In this case, as indicated by reference numeral 810, upon detecting an input for user authentication in a slide-out state of the electronic device 200, the electronic device 200 may display an indicating object 815 (e.g., fingerprint image object and/or guide text object) in a designated area (e.g., area in which second fingerprint sensor module 530 is disposed) of the flexible display 230, thereby enabling fingerprint recognition to be performed (or guided). Based on detecting a finger contact with the indicating object 815 displayed in the designated area of the flexible display 230, the electronic device 200 may acquire a fingerprint image through the second fingerprint sensor module 530 and may perform user authentication by using the acquired fingerprint image.

In various embodiments, the first area 230a and the second area 230b of the flexible display 230 may be disposed to be visible from the outside when the electronic device 200 is in a slide-out state such that various user modes are performed by using the first fingerprint sensor module 520 and the second fingerprint sensor module 530 disposed in at least a partial area of the back surface (e.g., -z axis direction) of the first area 230a and the second area 230b, respectively.

In various embodiments, the user mode may include a first user mode, a second user mode, and a third user mode.

In an embodiment, the first user mode may be a default mode. For example, the first user mode may be, as described above, a mode in which user authentication is performed by using the first fingerprint sensor module 520 in a slide-in state of the electronic device 200, and user authentication is performed by using the second fingerprint sensor module 530 in a slide-out state of the electronic device 200. Through user authentication using the first fingerprint sensor module 520 or the second fingerprint sensor module 530 in a slide-in state or slide-out state of the electronic device 200, the electronic device 200 may perform a designated operation (e.g., unlocking).

In an embodiment, the second user mode may be a mode in which the user logs into a registered second account. As indicated by reference numeral 830, upon detecting an input for user authentication in a slide-out state, the electronic device 200 may display a first indicating object 815 (e.g., fingerprint image object and/or guide text object) for performing fingerprint recognition in a first designated area (e.g., area in which second fingerprint sensor module 530 is disposed) of the flexible display 230 and may display a second indicating object 835 for performing fingerprint recognition in a second designated area (e.g., area in which first fingerprint sensor module 520 is disposed) of the flexible display 230.

In an embodiment, upon detecting a finger contact with the second indicating object 835 displayed in the second designated area of the flexible display 230, the electronic device 200 may acquire a fingerprint image through the first fingerprint sensor module 520, may perform user authentication by using the acquired fingerprint image, and may control to operate in the second user mode. For example, when logging in to the second account, the electronic device 200 may execute a mode configured for the second account. For example, a configuration may be made to dispose an application icon in a screen disposition mode configured for the second account, and/or to automatically log in to the second account in connection with at least one application having enabled auto login.

In an embodiment, the third user mode may be a secure mode in which a financial application, payment information (e.g., card number, date of expiration), or information that requires security can be stored or managed. As indicated by reference numeral 850, upon detecting an input for user authentication in a slide-out state, the electronic device 200 may display a first indicating object 815 (e.g., fingerprint image object and/or guide text object) for performing fingerprint recognition in a first designated area (e.g., area in which second fingerprint sensor module 530 is disposed) of the flexible display 230 and may display a second indicating object 835 for performing fingerprint recognition in a second designated area (e.g., area in which first fingerprint sensor module 520 is disposed) of the flexible display 230.

In an embodiment, upon detecting a finger contact with the first indicating object 815 displayed in the first designated area of the flexible display 230 and the second indicating object 835 displayed in the second designated area thereof, the electronic device 200 may acquire fingerprint images through the second fingerprint sensor module 530 and the first fingerprint sensor module 520, may perform user authentication by using the acquired fingerprint images, and may control to operate in the third user mode.

An electronic device 200 according to various embodiments may include a first housing 210, a second housing 220 slidably coupled to the first housing 210, a flexible display 230 including a first area 230a visible from the outside when the second housing 220 is in a slide-in state and a second area 230b extending on a substantially identical plane with the first area 230a when the second housing 220 is in a slide-out state, a first fingerprint sensor module 520 disposed on at least a part of the back surface (e.g., -z axis direction) of the first area 230a of the flexible display 230, a second fingerprint sensor module 530 disposed on at least a part of the back surface (e.g., -z axis direction) of the second area of 230b the flexible display 230, and an electric connection member 510 configured to electrically connect the first fingerprint sensor module 520 and the second fingerprint sensor module 530. The position of the first fingerprint sensor module 520 from the lower end of the first housing 210 in the slide-in state may be disposed to overlap the position of the second fingerprint sensor module 530 from the lower end of the first housing 210 in the slide-out state. Due to this overlap, regardless of whether the electronic device 200 is in a slide-in state or in a slide-out state, biometric information (e.g., fingerprint information) can be acquired in substantially the same position, thereby providing consistency in user experience in connection with performing user authentication.

The electronic device 200 according to various embodiments may further include a sensor driver circuit 540 disposed on at least another area of the back surface (e.g., -z axis direction) of the first area 230a of the flexible display 230. The first fingerprint sensor module 520, the sensor driver circuit 540, and the second fingerprint sensor module 530 may be connected through the electric connection member 510.

In various embodiments, when the electronic device 200 is viewed from the front surface, the position of the first fingerprint sensor module 520 in the slide-in state and the position of the second fingerprint sensor module 530 in the slide-out state may be substantially identical.

The electronic device 200 according to various embodiments may further include a processor 120. The processor 120 may control the first fingerprint sensor module 520 to an active state, when an input for biometric authentication is detected in the slide-in state, such that user authentication is performed through the first fingerprint sensor module 520, and may control at least one fingerprint sensor module among the first fingerprint sensor module 520 and the second fingerprint sensor module 530 to an active state, when an input for biometric authentication is detected in the slide-out state, such that the user authentication is performed through at least one fingerprint sensor module among the first fingerprint sensor module 520 and the second fingerprint sensor module 530.

In various embodiments, the processor 120 may be configured to provide a different user mode, based on at least one piece of biometric information acquired through at least one fingerprint sensor module among the first fingerprint sensor module 520 and the second fingerprint sensor module 530, when an input for the biometric authentication is detected in the slide-out state.

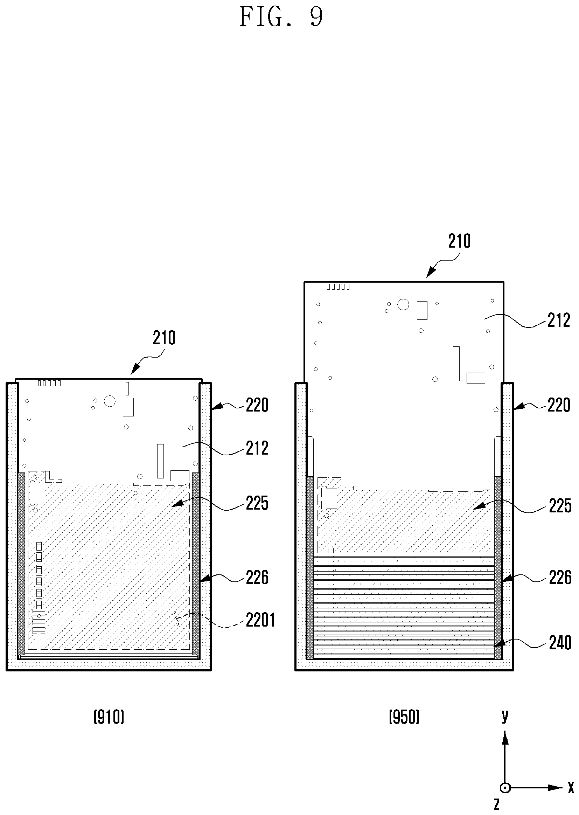

FIG. 9 is a front view of an electronic device 200 according to various embodiments. In an embodiment, the electronic device 200 of FIG. 9 may be the same as the electronic device described above with reference to FIGs. 1-4 and/or FIGs 7-8.

Referring to FIG. 9, reference numeral 910 indicates a front view of a first support member 212 and a frame cover 225 in a slide-in state of an electronic device (e.g., electronic device 200 in FIG. 2A to FIG. 4). Reference numeral 950 indicates a front view of the first support member 212 and the frame cover 225 in a slide-out state of the electronic device 200.

In an embodiment, the electronic device 200 may include a first housing 210 (e.g., first housing structure, moving portion, or sliding housing) and a second housing 220 (e.g., second housing structure, fixed portion, or base housing) coupled to the first housing 210 to be able to slide in a designated direction (e.g., ±y axis direction).

In an embodiment, the electronic device 200 may include a plate-type frame cover 225 (e.g., support bracket (e.g., display support bar (DSB)) disposed in a second space 2201 of the second housing 220 and coupled to at least a part of the first support member 212 (e.g., front cover) to be able to slide. The frame cover 225 may be disposed to be fixed to the second housing 220 regardless of a movement of the flexible display 230 according to a slide-in or slide-out state of the electronic device 200.

In an embodiment, the electronic device 200 may include a pair of guide rails 226 disposed on both side surfaces of the frame cover 225 so as to guide both ends of a multi-bar 240 in a sliding direction.

In various embodiments, a fingerprint sensor module may be disposed on the frame cover 225 disposed to be fixed to the second housing 220 such that a fingerprint image can be acquired in a consistent position even in a slide-in or slide-out state of the electronic device 200. In this way, regardless of whether the electronic device 200 is in a slide-in state or in a slide-out state, biometric information (e.g., fingerprint information) can be acquired in substantially the same position, thereby providing consistency in user experience in connection with performing user authentication.

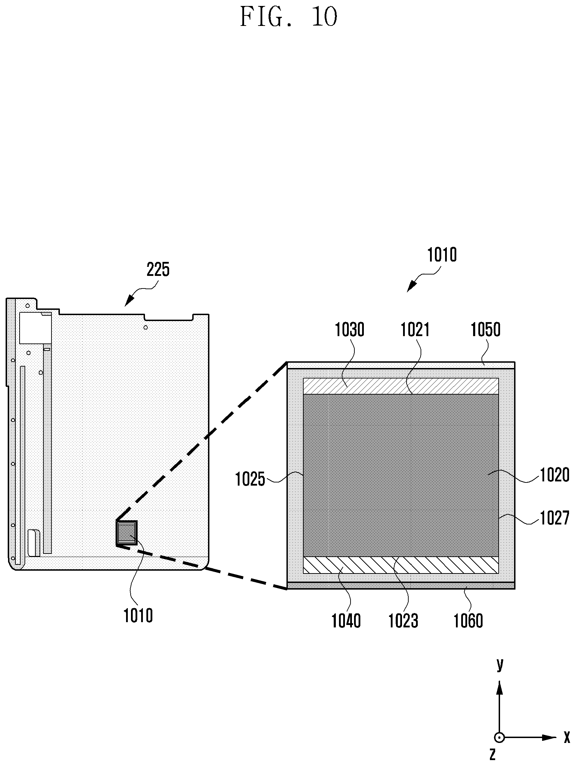

In this connection, various embodiments will be described below with reference to FIG. 10 to FIG. 16. FIG. 10 to FIG. 16 show various details and/or different views of the electronic device 200 described with reference to FIG. 1-9. It should be appreciated that the various details shown in these Figures may, but need not necessarily, be combined with the electronic device 200 described above with reference to FIG. 1-9.

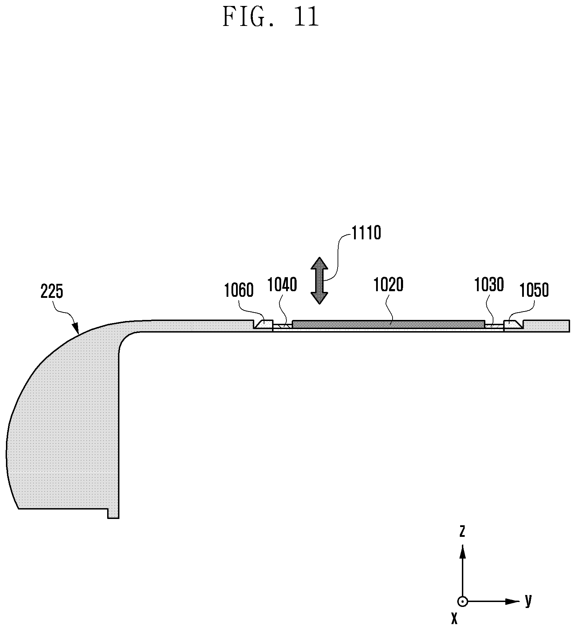

FIG. 10 is a front view of a fingerprint sensor module 1010 disposed in a partial area of a frame cover 225 according to various embodiments. FIG. 11 is a side view of a fingerprint sensor module 1010 disposed in a partial area of a frame cover 225 according to various embodiments.

Referring to FIG. 10 and FIG. 11, the electronic device (e.g., electronic device 200 in FIG. 2A to FIG. 4, and/or any or all of FIGs. 7-9) may include a plate-type frame cover 225 (e.g., support bracket (e.g., display support bar (DSB)) disposed in a second space (e.g., second space 2201 in FIG. 3A to FIG. 4) of the second housing (e.g., second housing 220 in FIG. 2A to FIG. 4).

In various embodiments, the electronic device 200 may include a fingerprint sensor module 1010. For example, the fingerprint sensor module 1010 may be disposed in a partial area of the frame cover 225.

In an embodiment, the fingerprint sensor module 1010 may include a fingerprint recognition sensor 1020, a first magnet 1030, and/or a second magnet 1040.

In an embodiment, the first magnet 1030 may be disposed on at least a part of the first side surface of the fingerprint recognition sensor 1020, and the second magnet 1040 may be disposed on at least a part of the second surface of the fingerprint recognition sensor 1020 formed in a direction substantially parallel to the first side surface. For example, the first magnet 1030 may be disposed on at least a part of the upper surface 1021 (e.g., side surface in y axis direction) of the fingerprint recognition sensor 1020 when the first side surface of the fingerprint recognition sensor 1020, for example, the frame cover 225 is viewed from the front. The second magnet 1040 may be disposed on at least a part of the lower surface 1023 (e.g., side surface in -y axis direction) of the fingerprint recognition sensor 1020 when the second side surface of the fingerprint recognition sensor 1020, for example, the frame cover 225 is viewed from the front.

This is not limiting in any manner, the first surface of the fingerprint recognition sensor 1020 may be the left surface 1025 (e.g., side surface in -x axis direction) when the frame cover 225 is viewed from the front, and the second surface of the fingerprint recognition sensor 1020 may be the right surface 1027 (e.g., side surface in x axis direction) when the frame cover 225 is viewed from the front. In this case, the first magnet 1030 may be disposed on at least a part of the left surface 1025 (e.g., side surface in -x axis direction) of the first fingerprint recognition sensor 1020 when the first side surface of the fingerprint recognition sensor 1020, for example, the frame cover 225 is viewed from the front. The second magnet 1040 may be disposed on at least a part of the right surface 1027 (e.g., side surface in x axis direction) of the first fingerprint recognition sensor 1020 when the second side surface of the fingerprint recognition sensor 1020, for example, the frame cover 225 is viewed from the front.

In an embodiment, the first magnet 1030 and the second magnet 1040 may be disposed to have opposite polarities when the frame cover 225 is viewed from the front. For example, the first magnet 1030 may be disposed to have an S-pole (or N-pole), and the second magnet 1040 may be disposed to have an N-pole (or S-pole), when the frame cover 225 is viewed from the front.

In an embodiment, the fingerprint sensor module 1010 may have a first inclined surface 1050 and a second inclined surface 1060 on both sides of a surface of the fingerprint sensor module 1010 and inclined at a predetermined angled. The fingerprint sensor module 1010 may be able to move in a designated direction 1110 (e.g., ±z axis direction). The first inclined surface 1050 and the second inclined surface 1060 may guide the fingerprint sensor module 1010 to be able to move in the designated direction 1110 (e.g., ±z axis direction) when the electronic device 200 switches from a slide-in state to a slide-out state (or from slide-out state to slide-in state).

In an embodiment, the fingerprint recognition sensor 1020 of the fingerprint sensor module 1010 may be disposed to protrude in the upward direction (e.g., z axis direction) relative to the first magnet 1030 and the second magnet 1040. The fingerprint recognition sensor 1020 configured to acquire biometric information (e.g., fingerprint information) may be disposed to protrude in the upward direction (e.g., z axis direction) relative to the first magnet 1030 and the second magnet 1040 and to be able to move in the designated direction 1110 (e.g., ±z axis direction) such that the interval between the fingerprint recognition sensor 1020 and the flexible display 230 disposed on the upper portion of the fingerprint sensor module 1010 is reduced. Such a reduced interval between the fingerprint recognition sensor 1020 and the flexible display 230 may improve the sensing performance of the fingerprint recognition sensor.

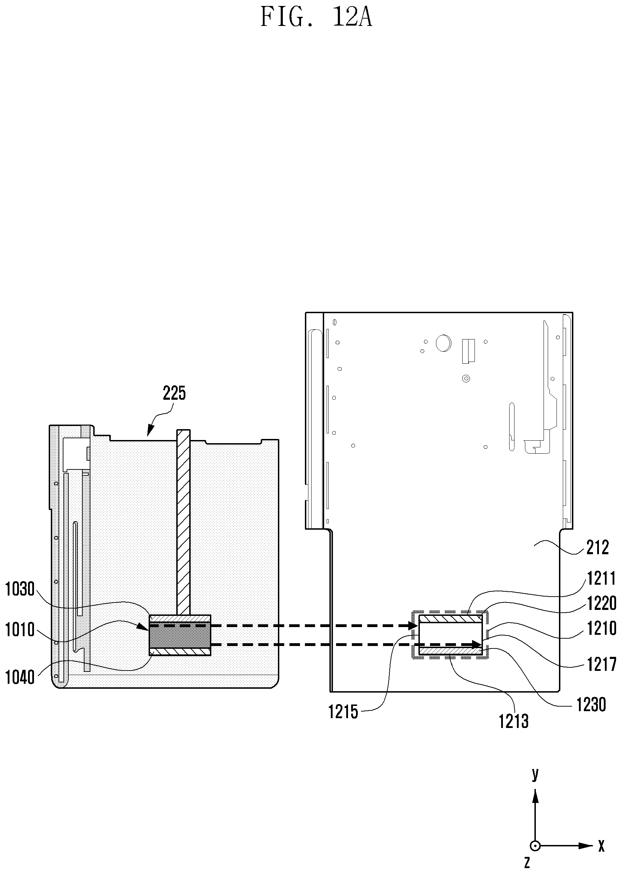

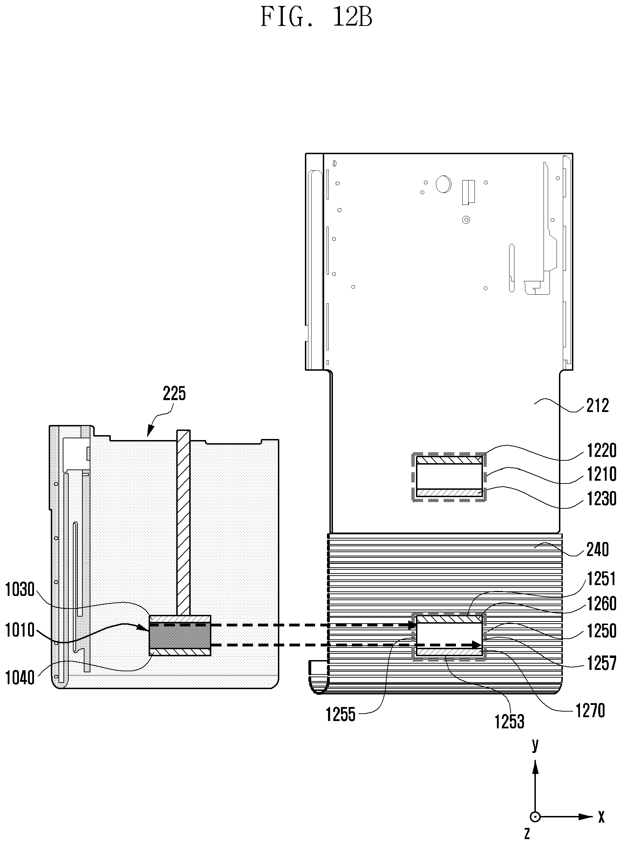

FIG. 12A is a front view of a fingerprint sensor module 1010 and a first support member 212, which are disposed in a partial area of a frame cover 225, when an electronic device 200 is in a slide-in state, according to various embodiments. FIG. 12B is a front view of a fingerprint sensor module 1010, a first support member 212, and a multi-bar 240, which are disposed in a partial area of a frame cover 225, when an electronic device 200 is in a slide-out state, according to various embodiments.

Referring to FIG. 12A, the electronic device (e.g., electronic device 200 in FIG. 2A to FIG. 4 and/or any or all of FIGs. 7-9) may include a first housing (e.g., first housing 210 described above with reference to FIG. 2A to FIG. 4 and/or any or all of FIGs. 7-9 (e.g., first housing structure, moving portion, or sliding housing)) and a second housing (e.g., second housing 220 described above with reference to FIG. 2A to FIG. 4 and/or any or all of FIGs. 7-9 (e.g., second housing structure, fixed portion, or base housing)) coupled to the first housing 210 to be able to slide in a designated direction (e.g., ±y axis direction).

In an embodiment, the first housing 210 of the electronic device 200 may include a first support member 212 (e.g., front cover) extending from at least a part of a first side member (e.g., first side member 211 in FIG. 3A, FIG. 3B, and/or FIG. 9) to at least a part of a first space (e.g., first space 2101 in FIG. 3A to FIG. 4). The electronic device 200 may include a plate-type frame cover 225 disposed in a second space (e.g., second space 2201 in FIG. 3A to FIG. 4) of the second housing 220 and coupled to at least a part of the first support member 212 to be able to slide.

In an embodiment, the electronic device 200 may include a fingerprint sensor module 1010. For example, the fingerprint sensor module 1010 may be disposed in a partial area of the frame cover 225.

In an embodiment, the first support member 212 may include a first fingerprint sensor hole 1210 (e.g., first opening or first through-hole) formed in an area corresponding to the fingerprint sensor module 1010 disposed in a partial area of the frame cover 225 when the electronic device 200 is in a slide-in state.

In an embodiment, the first fingerprint sensor hole 1210 may be formed in an area corresponding to the fingerprint sensor module 1010 disposed in a partial area of the frame cover 225 of the first support member 212 when the electronic device 200 is in a slide-in state such that the fingerprint recognition sensor 1020 can emit light toward the flexible display (e.g., z axis direction) through the first fingerprint sensor hole 1210 or receive at least a part of reflected light of a fingerprint introduced to the fingerprint sensor module 1010.

In an embodiment, when the first side surface of the first fingerprint sensor hole 1210 formed on the first support member 212 is viewed from the front (e.g., when the first support member 212 is viewed from the front), a third magnet 1220 may be disposed on at least a part of the upper surface 1211 (e.g., side surface in y axis direction) to be coupled to a magnet (e.g., first magnet 1030) of the fingerprint sensor module 1010. For example, the first magnet 1030 of the fingerprint sensor module 1010 and the third magnet 1220 disposed on at least a part of the first side surface (e.g., upper surface 1211) surface of the first fingerprint sensor hole 1210 may have opposite polarities such that the same can be coupled to each other. When the second side surface of the first fingerprint sensor hole 1210 formed on the first support member 212 is viewed from the front (e.g., when the first support member 212 is viewed from the front), a fourth magnet 1230 may be disposed on at least a part of the lower surface 1213 (e.g., side surface in -y axis direction) to be coupled to a magnet (e.g., second magnet 1040) of the fingerprint sensor module 1010. For example, the second magnet 1040 of the fingerprint sensor module 1010 and the fourth magnet 1230 disposed on at least a part of the second side surface (e.g., lower surface 1213) surface of the first fingerprint sensor hole 1210 may have opposite polarities such that the same can be coupled to each other.

This is not limiting in any manner, the first side surface of the fingerprint sensor hole 1210 may be the left surface 1215 (e.g., side surface in -x axis direction) when the first support member 212 is viewed from the front, and the second side surface of the first fingerprint sensor hole 1210 may correspond to the right surface 1217 (e.g., side surface in x axis direction) when the second support member 212 is viewed from the front. In an embodiment, when the first magnet 1030 of the fingerprint sensor module 1010 is disposed on at least a part of the left surface 1025 (e.g., side surface in -x axis direction) of the fingerprint recognition sensor 1020, and when the second magnet 1040 of the fingerprint sensor module 1010 is disposed on at least a part of the right surface 1027 (e.g., side surface in x axis direction) of the fingerprint recognition sensor 1020, the third magnet 1020 may be disposed on at least a part of the left surface 1215 inside the first fingerprint sensor hole 1210, and the fourth magnet 1230 may be disposed on at least a part of the right surface 1217 inside the first fingerprint sensor hole 1210.

According to various embodiments, although not illustrated in FIG. 12A, a groove for receiving the first inclined surface 1050 and the second inclined surface 1060 may be formed in an area (e.g., a partial area in the outward direction (e.g., ±y axis direction) of the area in which the first fingerprint sensor hole 1210 is formed) corresponding to the first inclined surface 1050 (e.g., first inclined surface 1050 in FIG. 10 or FIG. 11) and the second inclined surface 1060 (e.g., second inclined surface 1060 in FIG. 10 or FIG. 11) of the fingerprint sensor module 1010, in connection with a surface (e.g., surface facing -z axis direction) of the first support member 212 disposed to face the frame cover 225.

Referring to FIG. 12B, the electronic device 200 may include a multi-bar 240 (e.g., bendable member, multi-joint hinge module, or multi-bar assembly) configured to form substantially the same plane with the first support member 212 (e.g., front cover) at least partially extending from at least a part of the first side member 211 of the first housing 210 to at least a part of the first space 2101, in a slide-out state. The multi-bar 240 may be at least partially contained in the second space (e.g., second space 2201 in FIG. 3A to FIG. 4) of the second housing 220 when the electronic device 200 is in a slide-in state.

In an embodiment, the multi-bar 240 may include a second fingerprint sensor hole 1250 (e.g., second opening or second through-hole) formed in an area corresponding to the fingerprint sensor module 1010 disposed in a partial area of the frame cover 225 when the electronic device 200 is in a slide-out state.

In an embodiment, the second fingerprint sensor hole 1250 may be formed in an area corresponding to the fingerprint sensor module 1010 disposed in a partial area of the frame cover 225 of the multi-bar 240 when the electronic device 200 is in a slide-out state such that the fingerprint recognition sensor 1020 can emit light toward the flexible display (e.g., z axis direction) through the second fingerprint sensor hole 1250 or receive at least a part of reflected light of a fingerprint introduced to the fingerprint sensor module 1010.

In an embodiment, when the first side surface of the second fingerprint sensor module 1250 formed on the multi-bar 240 is viewed from the front (e.g., when the multi-bar 240 is viewed from the front), a fifth magnet 1260 may be disposed on at least a part of the upper surface 1251 (e.g., side surface in y axis direction) to be coupled to a magnet (e.g., first magnet 1030) of the fingerprint sensor module 1010. For example, the first magnet 1030 of the fingerprint sensor module 1010 and the fifth magnet 1260 disposed on at least a part of the first side surface (e.g., upper surface 1251) of the second fingerprint sensor hole 1250 may have opposite polarities such that the same can be coupled to each other. When the second side surface of the second fingerprint sensor hole 1250 formed in the multi-bar 240 is viewed from the front (e.g., when the multi-bar 240 is viewed from the front), a sixth magnet 1270 may be disposed on at least a part of the lower surface 1253 (e.g., side surface in -y axis direction) to be coupled to a magnet (e.g., second magnet 1040) of the fingerprint sensor module 1010. For example, the second magnet 1040 of the fingerprint sensor module 1010 and the sixth magnet 1270 disposed on at least a part of the second side surface (e.g., lower surface 1253) of the second fingerprint sensor hole 1250 may have opposite polarities such that the same can be coupled to each other.

This is not limiting in any manner, the first side surface of the second fingerprint sensor hole 1250 may be the left surface 1255 (e.g., side surface in -x axis direction) when the multi-bar 240 is viewed from the front, the second side surface of the second fingerprint sensor hole 1250 may correspond to the right surface 1257 (e.g., side surface in x axis direction) when the multi-bar 240 is viewed from the front. In an embodiment, when the first magnet 1030 of the fingerprint sensor module 1010 is disposed on at least a part of the left surface 1025 (e.g., side surface in -x axis direction) of the fingerprint sensor module 1010, and when the second magnet 1040 of the fingerprint sensor module 1010 is disposed on at least a part of the right surface 1027 (e.g., side surface in x axis direction) of the fingerprint recognition sensor 1020, the third magnet 1020 may be disposed on at least apart of the left surface 1255 inside the second fingerprint sensor hole 1250, and the fourth magnet 1230 may be disposed on at least a part of the right surface 1257 inside the second fingerprint sensor hole 1250.

According to various embodiments, although not illustrated in FIG. 12B, a groove for receiving the first inclined surface 1050 and the second inclined surface 1060 of the fingerprint sensor module 1010 may be formed in an area (e.g., a partial area in the outward direction (e.g., ±y axis direction) of the area in which the second fingerprint sensor hole 1250 is formed) corresponding to the first inclined surface 1050 and the second inclined surface 1060 of the fingerprint sensor module 1010, in connection with a surface (e.g., surface facing -z axis direction) of the multi-bars 240 disposed to face the frame cover 225.

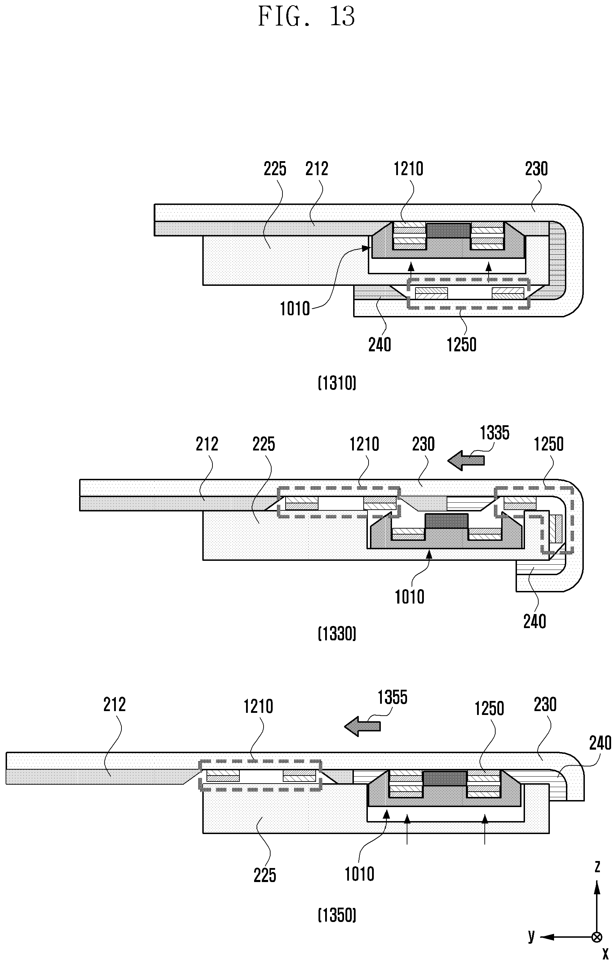

FIG. 13 illustrates operations of a fingerprint sensor module 1010 according to a slide-in state or slide-out state of an electronic device 200 according to various embodiments.

Referring to FIG. 13, reference numeral 1310 indicates a side view of an electronic device (e.g., electronic device 200 in FIG. 2A to FIG. 4 and/or any or all of FIGs. 7-9) in a slide-in state. Reference numeral 1330 indicates a side view of the electronic device 200 which is transitioning from a slide-in state to a slide-out state. Reference numeral 1350 indicates a side view of the electronic device 200 in a slide-out state.

In an embodiment, the electronic device 200 may include a fingerprint sensor module 1010 disposed in a partial area of the frame cover 225. The first support member 212 (e.g., front cover) may include a first fingerprint sensor hole 1210 (e.g., first opening or first through-hole) formed in an area corresponding to the fingerprint sensor module 1010 disposed in a partial area of the frame cover 225 when the electronic device 200 is in a slide-in state. The multi-bar 240 may include a second fingerprint sensor hole 1250 (e.g., second opening or second through-hole) formed in an area corresponding to the fingerprint sensor module 1010 disposed in a partial area of the frame cover 225 when the electronic device 200 is in a slide-out state.

In an embodiment, referring to reference numeral 1310, the fingerprint sensor module 1010 may be moved in a designated direction (e.g., z axis direction) by coupling between multiple magnets 1030, 1040 (e.g., multiple magnets 1030, 1040 in FIG. 10 to FIG. 12B) of the fingerprint sensor module 1010 and multiple magnets 1220, 1230 (e.g., multiple magnets 1220, 1230 in FIG. 12A or FIG. 12B) disposed on side surfaces 1211, 1213 (e.g., side surfaces 1211, 1213 in FIG. 12A) inside the first fingerprint sensor hole 1210, when the electronic device 200 is in a slide-in state. Accordingly, the first inclined surface 1050 (e.g., first inclined surface 1050 in FIG. 10 or FIG. 11) and the second inclined surface 1060 (e.g., second inclined surface 1060 in FIG. 10 or FIG. 11) of the fingerprint sensor module 1010 may be contained in a groove formed on a surface (e.g., surface in -z axis direction) of the first support member 212. In other words, the fingerprint sensor module 1010 may be fixed on the back surface (e.g., surface in -z axis direction) of the flexible display 230 by coupling between the multiple magnets 1030, 1040 of the fingerprint sensor module 1010 and the multiple magnets 1220, 1230 disposed on the side surfaces 1211, 1213 inside the first fingerprint sensor hole 1210. In this case, the fingerprint recognition sensor 1020 (e.g., fingerprint sensor module 1020 in FIG. 10 or FIG. 11) of the fingerprint sensor module 1010 may emit light toward the flexible display (e.g., z axis direction) through the first fingerprint sensor hole 1210 or may receive at least a part of reflected light of a fingerprint introduced to the fingerprint sensor module 1010, thereby acquiring a fingerprint image. In an embodiment, as the fingerprint sensor module 1010 is moved in a designated direction (e.g., z axis direction), the interval between the fingerprint recognition sensor 1020 and the flexible display 230 may be smaller than that before the movement of the fingerprint sensor module 1010. Such a reduced interval between the fingerprint recognition sensor 1020 and the flexible display 230 may improve the sensing performance of the fingerprint recognition sensor 1020, compared with that before the movement of the fingerprint sensor module 1010.

In an embodiment, referring to reference numeral 1330, as the electronic device 200 transitions from a slide-in state to a slide-out state, the first housing 210 (e.g., first housing 210 in FIG. 2A to FIG. 4) may move 1335 in a sliding type from the second housing 220 (e.g., second housing 220 in FIG. 2A to FIG. 4) along a designated direction (e.g., y axis direction). In this case, the second area 230b (e.g., second area 230b in FIG. 3B, FIG. 5, FIG. 6, or FIG. 7) of the flexible display 230 may be dispose to be visible from the outside while being supported by the multi-bar 240 which at least partially forms the same plane with the first housing 210, and the fingerprint sensor module 1010 may be disposed to face an area of the first support member 212 and/or the multi-bar 240 in which no groove is formed. In this case, coupling between the multiple magnets 1030, 1040 of the fingerprint sensor module 1010 and the multiple magnets 1220, 1230 disposed on the side surfaces 1211, 1213 inside the first fingerprint sensor hole 1210 may be released. As a result, the fingerprint sensor module 1010 may be moved in a designated direction (e.g., -z axis direction).

In an embodiment, referring to reference numeral 1350, as the first housing 210 is fully moved 1355 in a sliding type form the second housing 220 in a designated direction (e.g., y axis direction), the electronic device 200 may reach a slide-out state. When the electronic device 200 is in a slide-out state, the fingerprint sensor module 1010 may be moved in a designated direction (e.g., z axis direction) by coupling between the multiple magnets 1030, 1040 of the fingerprint sensor module 1010 and the multiple magnets 1260, 1270 (e.g., multiple magnets 1260, 1270 in FIG. 12B) disposed on the side surfaces 1251, 1253 (e.g., side surfaces 1251, 1253 in FIG. 12B) inside the second fingerprint sensor hole 1250. Accordingly, the first inclined surface 1050 and the second inclined surface 1060 of the fingerprint sensor module 1010 may be contained in a groove formed on a surface (e.g., surface in -z axis direction) of the multi-bar 240. In other words, the fingerprint sensor module 1010 may be fixed on the back surface (e.g., surface in -z axis direction) of the flexible display 230 by coupling between the multiple magnets 1030, 1040 of the fingerprint sensor module 1010 and the multiple magnets 1260, 1270 disposed on the side surfaces 1251, 1253 inside the second fingerprint sensor hole 1250. In this case, the fingerprint recognition sensor 1020 of the fingerprint sensor module 1010 may emit light toward the flexible display (e.g., z axis direction) through the second fingerprint sensor hole 1250 or may receive at least a part of reflected light of a fingerprint introduced to the fingerprint sensor module 1010, thereby acquiring a fingerprint image. In an embodiment, as the fingerprint sensor module 1010 is moved in a designated direction (e.g., z axis direction), the interval between the fingerprint recognition sensor 1020 and the flexible display 230 may be smaller than that before the movement of the fingerprint sensor module 1010. Such a reduced interval between the fingerprint recognition sensor 1020 and the flexible display 230 may improve the sensing performance of the fingerprint recognition sensor 1020, compared with that before the movement of the fingerprint sensor module 1010.

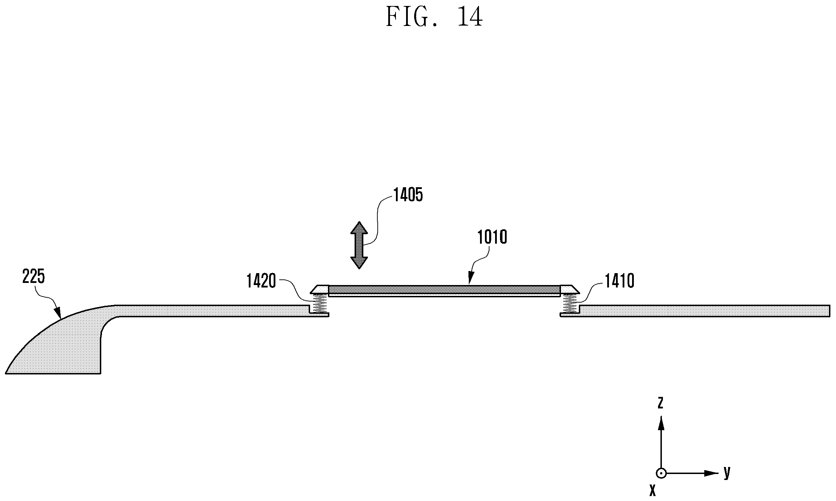

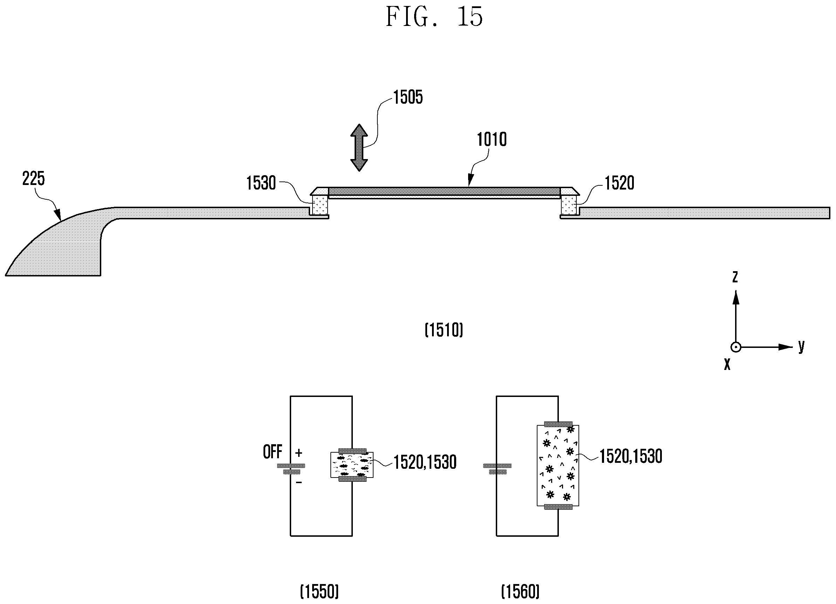

Although it has been assumed in the description of various embodiments with reference to FIG. 10 to FIG. 13 that the fingerprint sensor module 1010 is moved in a designated direction (e.g., ±z axis direction) by coupling between the magnets 1030, 1040 of the fingerprint sensor module 1010 and the magnets 1220, 1230 or 1260, 1270 disposed on a side surface inside a fingerprint sensor hole, this assumption is not limiting in any manner. For example, the electronic device 200 may include multiple elastic units (e.g., springs), multiple piezoelectric elements, multiple EPAs, or multiple shape-memory alloys such that the fingerprint sensor module 1010 can move in a designated direction (e.g., ±z axis direction). In this connection, various embodiments will be described below with reference to FIG. 14 and FIG. 15.

FIG. 14 is a side view of a fingerprint sensor module 1010 disposed in a partial area of a frame cover 225 according to various embodiments.

Referring to FIG. 14, the electronic device (e.g., electronic device 200 in FIG. 2A to FIG. 4) may include multiple elastic units 1410, 1420 (e.g., springs) such that the fingerprint sensor module 1010 can move in a designated direction 1405 (e.g., ±z axis direction). For example, the first elastic unit 1410 may be disposed between at least a part of the frame cover 225 and at least a part of the fingerprint sensor module 1010, and the second elastic unit 1420 may be disposed between at least another part of the frame cover 225 and at least another part of the fingerprint sensor module 1010.

In various embodiments, as described with reference to FIG. 12A and FIG. 12B, a groove for receiving the first inclined surface 1050 and the second inclined surface 1060 of the fingerprint sensor module 1010 may be formed in an area (e.g., a partial area in the outward direction (e.g., ±y axis direction) of the area in which the first fingerprint sensor hole 1210 or the second fingerprint sensor hole 1250 is formed) corresponding to the first inclined surface 1050 and the second inclined surface 1060 of the fingerprint sensor module 1010, in connection with a surface (e.g., surface in - z axis direction) of the first support member 212 (e.g., front cover) or the multi-bar 240, which is disposed to face the frame cover 225.

In an embodiment, when the electronic device 200 is in a slide-in state, the fingerprint sensor module 1010 may be moved by the multiple elastic units 1410, 1420 in a designated direction (e.g., z axis direction), and the first inclined surface 1050 and the second inclined surface 1060 of the fingerprint sensor module 1010 may thus be received in a groove formed on a surface (e.g., surface in -z axis direction) of the first support member 212.

In an embodiment, while the electronic device 200 transitions from a slide-in state to a slide-out state, the fingerprint sensor module 1010 may be disposed to face an area of the first support member 212 and/or the multi-bar 240 in which no groove is formed. In this case, the fingerprint sensor module 1010 may be moved by the multiple elastic units 1410, 1420 in a designated direction (e.g., -z axis direction).

In an embodiment, when the electronic device 200 is in a slide-out state, the fingerprint sensor module 1010 may be moved by the multiple elastic units 1410, 1420 in a designated direction (e.g., z axis direction), and the first inclined surface 1050 and the second inclined surface 1060 of the fingerprint sensor module 1010 may thus be received in a groove formed on a surface (e.g., surface in -z axis direction) of the multi-bar 240.

FIG. 15 is a side view of a fingerprint sensor module 1010 disposed in a partial area of a frame cover 225 according to various embodiments.

Referring to FIG. 15, as indicated by reference numeral 1510, the electronic device (e.g., electronic device 200 in FIG. 2A to FIG. 4) may include multiple piezoelectric elements 1520, 1530 such that the fingerprint sensor module 1010 can move in a designated direction (e.g., ±z axis direction). For example, the first piezoelectric element 1520 may be disposed between at least a part of the frame cover 225 and at least a part of the fingerprint sensor module 1010, and the second piezoelectric element 1530 may be disposed between at least another part of the frame cover 225 and at least another part of the fingerprint sensor module 1010.

In an embodiment, as indicated by reference numerals 1550 and 1560, the multiple piezoelectric elements 1520, 1530 may deform (e.g., contract or expand) according to a driving voltage applied thereto.

In various embodiments, as described with reference to FIG. 12A and FIG. 12B, grooves for receiving the first inclined surface 1050 and the second inclined surface 1060 of the fingerprint sensor module 1010 may be formed in an area (e.g., a partial area in the outward direction (e.g., ±y axis direction) of the area in which the first fingerprint sensor hole 1210 or the second fingerprint sensor hole 1250 is formed) corresponding to the first inclined surface 1050 and the second inclined surface 1060 of the fingerprint sensor module 1010, in connection with a surface (e.g., surface in - z axis direction) of the first support member 212 (e.g., front cover) or the multi-bar 240, which is disposed to face the frame cover 225.

In an embodiment, when the electronic device 200 is in a slide-in state, the fingerprint sensor module 1010 may be moved in a designated direction (e.g., z axis direction) as the multiple piezoelectric elements 1520, 1530 expand according to a driving voltage applied thereto, and the first inclined surface 1050 and the second inclined surface 1060 of the fingerprint sensor module 1010 may thus be received in a groove formed on a surface (e.g., surface in -z axis direction) of the first support member 212.

In an embodiment, while the electronic device 200 transitions from a slide-in state to a slide-out state, the fingerprint sensor module 1010 may be disposed to face an area of the first support member 212 and/or the multi-bar 240 in which no groove is formed. In this case, the fingerprint sensor module 1010 may be moved by contraction of the multiple piezoelectric elements 1520, 1530 in a designated direction (e.g., -z axis direction).

In an embodiment, when the electronic device 200 is in a slide-out state, the fingerprint sensor module 1010 may be moved in a designated direction (e.g., z axis direction) as the multiple piezoelectric elements 1520, 1530 expand according to a driving voltage applied thereto, and the first inclined surface 1050 and the second inclined surface 1060 of the fingerprint sensor module 1010 may thus be received in a groove formed on a surface (e.g., surface in -z axis direction) of the multi-bar 240.

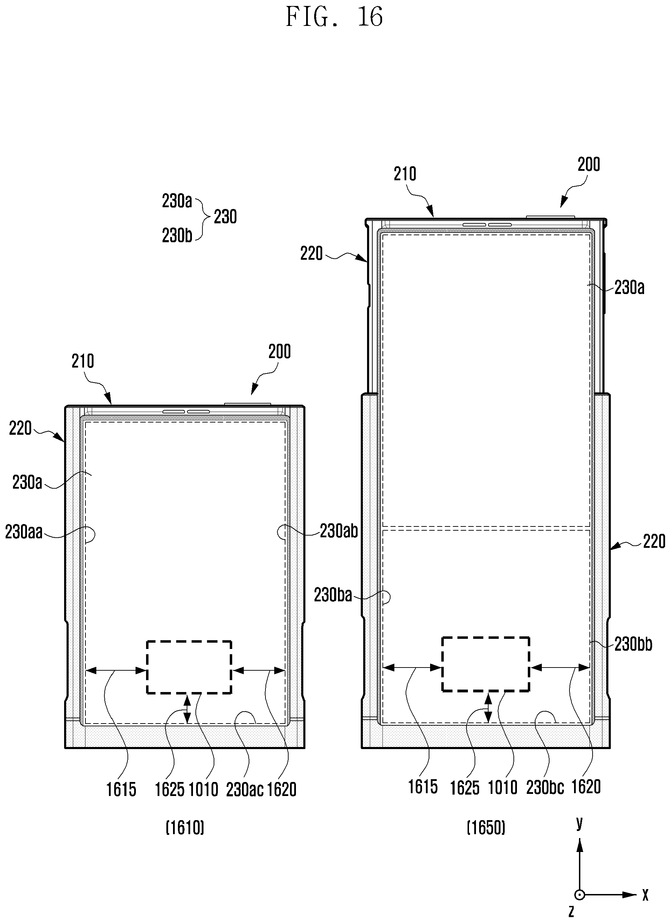

FIG. 16 is a front view of an electronic device 200 including a fingerprint sensor module 1010 according to various embodiments.

Referring to FIG. 16, reference numeral 1610 indicates a front view of an electronic device (e.g., electronic device 200 in FIG. 2A to FIG. 4 and/or any or all of FIGs. 7-9) including a fingerprint sensor module 1010 in a slide-in state. Reference numeral 1650 indicates a front view of the electronic device 200 including a fingerprint sensor module 1010 in a slide-out state.

In an embodiment, as indicated by reference numeral 1610, the first support member 212 (e.g., front cover) (e.g., first support member 212 in FIG. 9, FIG. 12A to FIG. 13) may have a first fingerprint sensor hole 1210 (e.g., first fingerprint sensor hole 1210 in FIG. 12A to FIG. 13) formed in an area corresponding to the fingerprint sensor module 1010 disposed in a partial area of the frame cover 225 (e.g., frame cover 225 in FIG. 10 to FIG. 15) when the electronic device 200 is in a slide-in state. In this case, the fingerprint recognition sensor 1020 (e.g., fingerprint recognition sensor 1020 in FIG. 10 or FIG. 11) of the fingerprint sensor module 1010 may emit light toward the flexible display (e.g., z axis direction) through the first fingerprint sensor hole 1210 or may receive at least a part of reflected light of a fingerprint introduced to the fingerprint sensor module 1010, thereby acquiring a fingerprint image.

In an embodiment, the fingerprint sensor module 1010 may be disposed to be spaced apart from a first side surface 230aa of the first area 230a of the flexible display 230 by a first length 1615, to be spaced apart from a second side surface 230ab of the first area 230a by a second length 1620, and to be spaced apart from a third side surface 230ac of the first area 230a by a third length 1625. The first length 1615 and the second length 1620 may be substantially identical. The third length 1625 may be smaller than the first length 1615 and the second length 1620. However, this is not limiting in any manner, and the third length 1625 may be substantially identical or larger than the first length 1615 and the second length 1620.

In an embodiment, as indicated by reference numeral 1650, the multi-bar 240 (e.g., multi-bar 240 in FIG. 12B or FIG. 13) may have a second fingerprint sensor hole 1250 (e.g., second fingerprint sensor hole 1250 in FIG. 12B or FIG. 13) formed in an area corresponding to the fingerprint sensor module 1010 disposed in a partial area of the frame cover 225. In this case, the fingerprint recognition sensor 1020 of the fingerprint sensor module 1010 may emit light toward the flexible display (e.g., z axis direction) through the second fingerprint sensor hole 1250 or may receive at least a part of reflected light of a fingerprint introduced to the fingerprint sensor module 1010, thereby acquiring a fingerprint image. An advantage of the arrangement of FIG. 16 is that a single fingerprint sensor module 1010 is used with multiple fingerprint sensor holes. This enables a relatively cheap and simplified design, because only a single fingerprint sensor module needs to be provided.

In an embodiment, when the electronic device 200 is viewed from the front, the position of the first fingerprint sensor hole 1210 formed in an area of the first support member 212, which corresponds to the fingerprint sensor module 1010 when the electronic device 200 is in a slide-in state, and the position of the second fingerprint sensor hole 1250 formed in an area of the multi-bar 240, which corresponds to the fingerprint sensor module 1010 when the electronic device 200 is in a slide-in state, may be substantially identical. For example, when the electronic device 200 is in a slide-out state, the fingerprint sensor module 1010 may be disposed to be spaced apart from the first side surface 230ba of the second area 230b of the flexible display 230 by a first length 1615, spaced apart from the second side surface 230bb of the second area 230b by a second length 1620, and spaced apart from the third side surface 230bc of the second area 230b by a third length 1625.

In various embodiments, when the electronic device 200 is viewed from the front, the position of the first fingerprint sensor hole 1210 formed in an area of the first support member 212, which corresponds to the fingerprint sensor module 1010 when the electronic device 200 is in a slide-in state, and the position of the second fingerprint sensor hole 1250 formed in an area of the multi-bar 240, which corresponds to the fingerprint sensor module 1010 when the electronic device 200 is in a slide-in state, may be substantially identical such that, regardless of whether the electronic device 200 is in a slide-in state or in a slide-out state, biometric information can be acquired in substantially the same position, thereby providing consistency in user experience in connection with performing user authentication.

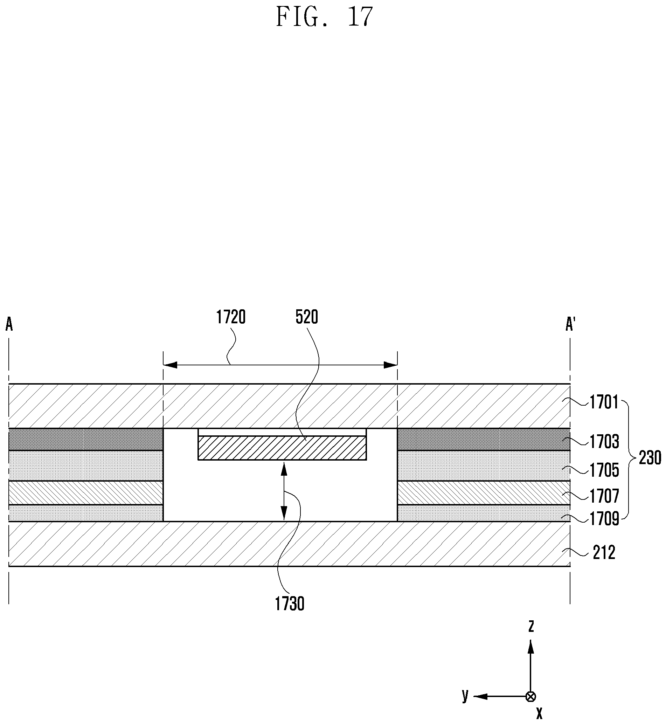

FIG. 17 is a partial sectional view of an electronic device 200 taken along line A-A' in FIG. 7, according to various embodiments.

A flexible display 230 according to exemplary embodiments of the disclosure may include an unbreakable (UB) type OLED display (e.g., curved display).

Referring to FIG. 17, the flexible display 230 may include a display panel 1071, a protective film 1703, a metal sheet layer 1705, a support sheet layer 1707, and/or an adhesive layer 1709.

In an embodiment, the protective film 1703 may physically support the display panel 1701 disposed on the upper portion thereof (e.g., z axis direction) and may prevent damage to the display panel 1701.

In an embodiment, the metal sheet layer 1705 may be formed in a shape such that the flexible display 230 has curvature. According to an embodiment, the metal sheet layer 1705 may include at least one of steel use stainless (SUS) (e.g., stainless steel (STS)), Cu, Al, or metal CLAD (e.g., laminated member having SUS and Al disposed alternately). In some embodiments, the metal sheet layer 1705 may include other alloy materials. In some embodiments, the metal sheet layer 1705 may be used to help reinforce the rigidity of the electronic device (e.g., electronic device 200 in FIG. 2), to shield peripheral noise, and to disperse heat emitted from peripheral heat-radiating components.

In an embodiment, the support sheet layer 1707 may be configured to absorb impacts applied to the flexible display 230. The support sheet layer 1707 may include an embossed sheet including an embossed pattern, and/or a cushion sheet including sponge.

In an embodiment, the adhesive layer 1709 may attach the support sheet layer 1707 and the first support member 212 (e.g., front cover) (e.g., first support member 212 in FIG. 4, FIG. 9, FIG. 12A to FIG. 13). For example, the adhesive layer 1709 may include at least one of optical clear adhesive (OCA), pressure sensitive adhesive (PSA), heat-reactive adhesive, normal adhesive, or double-sided tape.

In an embodiment, at least a partial area on the back surface (e.g., -z axis direction) of the display panel 1701 may form an opening. The length 1720 of the opening in a first direction (e.g., y axis direction) may have about 13mm. Although not illustrated, the length of the opening in a second direction (e.g., x axis direction) perpendicular to the first direction may have about 11mm. A fingerprint sensor module 520 may be disposed in at least a partial area on the back surface (e.g., -z axis direction) of the display panel 1701. The fingerprint sensor module 520 may be implemented in an ultrasonic type. However, this is not limiting in any manner, and the fingerprint sensor module 520 may be implemented in an optical type or capacitive type. In an embodiment, a predetermined gap 1730 (e.g., about 239um) may exist between the fingerprint sensor module 520 and the first support member 212.

An electronic device 200 according to various embodiments may include a first housing 210 including a first support member (e.g., frame cover 225), a second housing 220 comprising a second support member (e.g., support member 212 or front cover) and slidably coupled to the first housing 210, a flexible display 230 including a first area 230a visible from the outside when the second housing 220 is in a slide-in state and a second area 230b extending on a substantially identical plane with the first area 230a when the second housing 220 is in a slide-out state, a support bar (multi-bar) 240 configured to support a part of the back surface of the flexible display 230 and attached to the flexible display 230, a fingerprint sensor module 1010 disposed on the first support member (e.g., frame cover 225), a first fingerprint sensor hole 1210 formed in a partial area of the second support member (e.g., support member 212 or front cover), and a second fingerprint sensor hole 1250 formed in a partial area of the multi-bar 240. The position of the first fingerprint sensor hole 1210 from the lower end of the first housing 210 in the slide-in state may be disposed to overlap the position of the second fingerprint sensor hole 1250 from the lower end of the first housing 210 in the slide-out state.

In various embodiments, the first support member (e.g., frame cover 225) may be fixedly disposed on the second housing 220.

In various embodiments, the fingerprint sensor module 1010 may include a fingerprint recognition sensor 1020, a first magnet 1030, and a second magnet 1049. The first magnet 1030 may be disposed on a first side surface (e.g., upper surface 1021 or left surface 1025) of the fingerprint recognition sensor 1020 when the first support member (e.g., frame cover 225) is viewed from the front surface. The second magnet 1040 may be disposed on a second side surface (e.g., lower surface 1023 or right surface 1027) of the fingerprint recognition sensor 1020 when the first support member (e.g., frame cover 225) is viewed from the front surface.

In various embodiments, the second side surface (e.g., lower surface 1023 or right surface 1027) of the fingerprint recognition sensor 1020 may be spaced apart from the first side surface (e.g., upper surface 1021 or left surface 1025) of the fingerprint recognition sensor 1020 and may be formed in a substantially parallel direction to the first side surface (e.g., upper surface 1021 or left surface 1025) of the fingerprint recognition sensor 1020.

In various embodiments, the first magnet 1030 and the second magnet 1040 may be disposed to have opposite polarities when the first support member (e.g., frame cover 2250 is viewed from the front surface.

In various embodiments, the fingerprint sensor module 1010 may have a first inclined surface 1050 and a second inclined surface 1060 on both sides of a surface of the fingerprint sensor module 1010 so as to be inclined at a predetermined angle.

In various embodiments, the fingerprint recognition sensor 1020 may be disposed to protrude more toward the flexible display 230 than the first magnet 1030 and the second magnet 1040.

In various embodiments, a third magnet 1220 may be disposed on a first side surface (e.g., upper surface 1211 or left surface 1215) of the first fingerprint sensor hole 1210 formed in the second support member (e.g., support member 212 or front cover) so as to be coupled to the first magnet 1030 of the fingerprint sensor module 1010. A fourth magnet 1230 may be disposed on a second side surface (e.g., lower surface 1213 or right surface 1217) of the first fingerprint sensor hole 1210 formed in the second support member (e.g., support member 212 or front cover) so as to be coupled to the second magnet 1040 of the fingerprint sensor module 1010.

In various embodiments, the second side surface (e.g., lower surface 1213 or right surface 1217) of the first fingerprint sensor hole 1210 may be spaced apart from the first side surface (e.g., upper surface 1211 or left surface 1215) of the first fingerprint sensor hole 1210 and may be formed in a substantially parallel direction to the first side surface (e.g., upper surface 1211 or left surface 1215) of the first fingerprint sensor hole 1210.

In various embodiments, the fingerprint sensor module 1010 can move in a designated direction (e.g., ±z axis direction) by coupling or decoupling between the first magnet 1030 and the third magnet 1220 and coupling or decoupling between the second magnet 1040 and the fourth magnet 1230 when transitioning from the slide-in state to the slide-out state or transitioning from the slide-out state to the slide-in state.

In various embodiments, a groove may be formed in an area of a surface of the second support member (e.g., support member 212 or front cover) disposed to face the first support member (e.g., frame cover 225), the area corresponding to the first inclined surface 1050 and the second inclined surface 1060 of the fingerprint sensor module 1010, so as to receive the first inclined surface 1050 and the second inclined surface 1060 of the fingerprint sensor module 1010, and the first inclined surface 1050 and the second inclined surface 1060 of the fingerprint sensor module 1010 may be received in the groove formed on the surface of the second support member (e.g., support member 212 or front cover) by coupling between the first magnet 1030 and the third magnet 1220 and coupling between the second magnet 1040 and the fourth magnet 1230.

In various embodiments, a fifth magnet1260 may be disposed on a first side surface (e.g., upper surface 1251 or left surface 1255) of the second fingerprint sensor hole 1250 formed in the multi-bar 240 so as to be coupled to the first magnet 1030 of the fingerprint sensor module 1010, and a sixth magnet 1270 may be disposed on a second side surface (e.g., lower surface 1253 or right surface 1257) of the second fingerprint sensor hole 1250 formed in the multi-bar 240 so as to be coupled to the second magnet 1040 of the fingerprint sensor module 1010.

In various embodiments, the second side surface (e.g., lower surface 1253 or right surface 1257) of the second fingerprint sensor hole 1250 may be spaced apart from the first side surface (e.g., upper surface 1251 or left surface 1255) of the second fingerprint sensor hole 1250 and may be formed in a substantially parallel direction to the first side surface (e.g., upper surface 1251 or left surface 1255) of the second fingerprint sensor hole 1250.

In various embodiments, the fingerprint sensor module 1010 can move in a designated direction (e.g., ±z axis direction) by coupling or decoupling between the first magnet 1030 and the fifth magnet 1260 and coupling or decoupling between the second magnet 1040 and the sixth magnet 1270 when transitioning from the slide-in state to the slide-out state or transitioning from the slide-out state to the slide-in state.

In various embodiments, a groove may be formed in an area of a surface of the multi-bar 240 disposed to face the first support member (e.g., frame cover 225), the area corresponding to the first inclined surface 1050 and the second inclined surface 1060 of the fingerprint sensor module 1010, so as to receive the first inclined surface 1050 and the second inclined surface 1060 of the fingerprint sensor module 1010, and the first inclined surface 1050 and the second inclined surface 1060 of the fingerprint sensor module 1010 may be received in the groove formed on the surface of the multi-bar 240 by coupling between the first magnet 1030 and the fifth magnet 1260 and coupling between the second magnet 1040 and the sixth magnet 1270.

In various embodiments, the electronic device 200 may further include a processor 120. The processor 120 may be configured to emit light toward the flexible display 230 through the first fingerprint sensor hole 1210 formed in a partial area of the second support member (e.g., support member 212 or front cover) by using the fingerprint sensor module 1010 in the slide-in state, or receive at least a part of reflected light of a fingerprint introduced to the fingerprint sensor module 1010, thereby acquiring a fingerprint image.

In various embodiments, the electronic device 200 may further include a processor 120. The processor 120 may be configured to emit light toward the flexible display 230 through the second fingerprint sensor hole 1250 formed in a partial area of the multi-bar 240 by using the fingerprint sensor module 1010 in the slide-out state, or receive at least a part of reflected light of a fingerprint introduced to the fingerprint sensor module 1010, thereby acquiring a fingerprint image.

In various embodiments, when the electronic device 200 is viewed from the front surface, the position of the first fingerprint sensor hole 1210 formed in a partial area of the second support member (e.g., support member 212 or front cover) in the slide-in state and the position of the second fingerprint sensor hole 1250 formed in a partial area of the multi-bar 240 in the slide-out state may be substantially identical.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively," as "coupled with," "coupled to," "connected with," or "connected to" another element (e.g., a second element), it means that the element may be coupled with the other element directly (e.g., through wires), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry." A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

The embodiments of the disclosure described and shown in the specification and the drawings are merely specific examples that have been presented to easily explain the technical contents of the disclosure and help understanding of the disclosure, and are not intended to limit the scope of the disclosure. Therefore, the scope of the disclosure should be construed to include, in addition to the embodiments disclosed herein, all changes and modifications derived on the basis of the technical idea of the disclosure.

## Claims

1. An electronic device comprising:
a first housing;
a second housing slidably coupled to the first housing;
a flexible display comprising a first area visible from an outside in case that the second housing is in a slide-in state and a second area extending on a substantially identical plane with the first area in case that the second housing is in a slide-out state;
a first fingerprint sensor module disposed on at least a part of a back surface of the first area of the flexible display;
a second fingerprint sensor module disposed on at least a part of a back surface of the second area of the flexible display; and
an electric connection member configured to electrically connect the first fingerprint sensor module and the second fingerprint sensor module,
wherein a position of the first fingerprint sensor module from a lower end of the first housing in the slide-in state is disposed to overlap a position of the second fingerprint sensor module from the lower end of the first housing in the slide-out state.

2. The electronic device of claim 1, further comprising a sensor driver circuit disposed on at least another area of the back surface of the first area of the flexible display,
wherein the first fingerprint sensor module, the sensor driver circuit, and the second fingerprint sensor module are connected through the electric connection member.

3. The electronic device of claim 1, wherein, in case that the electronic device is viewed from a front surface, the position of the first fingerprint sensor module in the slide-in state and the position of the second fingerprint sensor module in the slide-out state are substantially identical.

4. The electronic device of claim 1, further comprising a processor,
wherein the processor is configured to:
control the first fingerprint sensor module to an active state, in case that an input for biometric authentication is detected in the slide-in state, such that user authentication is performed through the first fingerprint sensor module; and
control at least one fingerprint sensor module among the first fingerprint sensor module and the second fingerprint sensor module to an active state, in case that an input for biometric authentication is detected in the slide-out state, such that the user authentication is performed through at least one fingerprint sensor module among the first fingerprint sensor module and the second fingerprint sensor module.

5. The electronic device of claim 4, wherein the processor is further configured to provide a different user mode, based on at least one piece of biometric information acquired through at least one fingerprint sensor module among the first fingerprint sensor module and the second fingerprint sensor module, in case that an input for the biometric authentication is detected in the slide-out state.

6. An electronic device comprising:
a first housing comprising a first support member;
a second housing comprising a second support member and slidably coupled to the first housing;
a flexible display comprising a first area visible from an outside in case that the second housing is in a slide-in state and a second area extending on a substantially identical plane with the first area in case that the second housing is in a slide-out state;
a multi-bar configured to support a part of a back surface of the flexible display and attached to the flexible display;
a fingerprint sensor module disposed on the first support member;
a first fingerprint sensor hole formed in a partial area of the second support member; and
a second fingerprint sensor hole formed in a partial area of the multi-bar,
wherein a position of the first fingerprint sensor hole from a lower end of the first housing in the slide-in state is disposed to overlap a position of the second fingerprint sensor hole from the lower end of the first housing in the slide-out state.

7. The electronic device of claim 6, wherein the first support member is fixedly disposed on the second housing.

8. The electronic device of claim 6, wherein the fingerprint sensor module comprises a fingerprint recognition sensor, a first magnet, a second magnet,
wherein the first magnet is disposed on a first side surface of the fingerprint recognition sensor in case that the first support member is viewed from a front surface,
wherein the second magnet is disposed on a second side surface of the fingerprint recognition sensor in case that the first support member is viewed from the front surface, and
wherein the second side surface of the fingerprint recognition sensor is spaced apart from the first side surface of the fingerprint recognition sensor and is formed in a substantially parallel direction to the first side surface of the fingerprint recognition sensor.

9. The electronic device of claim 8, wherein the first magnet and the second magnet are disposed to have opposite polarities in case that the first support member is viewed from the front surface.

10. The electronic device of claim 8, wherein the fingerprint sensor module has a first inclined surface and a second inclined surface on both sides of a surface of the fingerprint sensor module so as to be inclined at a predetermined angle.

11. The electronic device of claim 8, wherein the fingerprint recognition sensor is disposed to protrude more toward the flexible display than the first magnet and the second magnet.

12. The electronic device of claim 8, wherein a third magnet is disposed on a first side surface of the first fingerprint sensor hole formed in the second support member so as to be coupled to the first magnet of the fingerprint sensor module,
wherein a fourth magnet is disposed on a second side surface of the first fingerprint sensor hole formed in the second support member so as to be coupled to the second magnet of the fingerprint sensor module,
wherein the second side surface of the first fingerprint sensor hole is spaced apart from the first side surface of the first fingerprint sensor hole and is formed in a substantially parallel direction to the first side surface of the first fingerprint sensor hole,
wherein the fingerprint sensor module is movable in a designated direction by coupling or decoupling between the first magnet and the third magnet and coupling or decoupling between the second magnet and the fourth magnet in case of transitioning from the slide-in state to the slide-out state or transitioning from the slide-out state to the slide-in state,
wherein a groove is formed in an area of a surface of the second support member disposed to face the first support member, the area corresponding to the first inclined surface and the second inclined surface of the fingerprint sensor module, so as to receive the first inclined surface and the second inclined surface of the fingerprint sensor module, and
wherein the first inclined surface and the second inclined surface of the fingerprint sensor module are received in the groove formed on the surface of the second support member by coupling between the first magnet and the third magnet and coupling between the second magnet and the fourth magnet.

13. The electronic device of claim 8, wherein a fifth magnet is disposed on a first side surface of the second fingerprint sensor hole formed in the multi-bar so as to be coupled to the first magnet of the fingerprint sensor module,
wherein a sixth magnet is disposed on a second side surface of the second fingerprint sensor hole formed in the multi-bar so as to be coupled to the second magnet of the fingerprint sensor module, and
wherein the second side surface of the second fingerprint sensor hole is spaced apart from the first side surface of the second fingerprint sensor hole and is formed in a substantially parallel direction to the first side surface of the second fingerprint sensor hole,
wherein the fingerprint sensor module is movable in a designated direction by coupling or decoupling between the first magnet and the fifth magnet and coupling or decoupling between the second magnet and the sixth magnet in case of transitioning from the slide-in state to the slide-out state or transitioning from the slide-out state to the slide-in state,
wherein a groove is formed in an area of a surface of the multi-bar disposed to face the first support member, the area corresponding to the first inclined surface and the second inclined surface of the fingerprint sensor module, so as to receive the first inclined surface and the second inclined surface of the fingerprint sensor module, and
wherein the first inclined surface and the second inclined surface of the fingerprint sensor module are received in the groove formed on the surface of the multi-bar by coupling between the first magnet and the fifth magnet and coupling between the second magnet and the sixth magnet.

14. The electronic device of claim 6, further comprising a processor,
wherein the processor is configured to:
emit light toward the flexible display through the first fingerprint sensor hole formed in a partial area of the second support member by using the fingerprint sensor module in the slide-in state, or receive at least a part of reflected light of a fingerprint introduced to the fingerprint sensor module, thereby acquiring a fingerprint image and/or,
emit light toward the flexible display through the second fingerprint sensor hole formed in a partial area of the multi-bar by using the fingerprint sensor module in the slide-out state, or receive at least a part of reflected light of a fingerprint introduced to the fingerprint sensor module, thereby acquiring a fingerprint image.

15. The electronic device of claim 6, wherein, in case that the electronic device is viewed from a front surface, the position of the first fingerprint sensor hole formed in a partial area of the second support member in the slide-in state and the position of the second fingerprint sensor hole formed in a partial area of the multi-bar in the slide-out state are substantially identical.
